# EUROPEAN PATENT APPLICATION

(11) **EP 4 756 841 A1**
(43) Date of publication of application: **10.06.2026**
(21) Application number: 24851767.4
(22) Date of filing: 02.08.2024
(51) Int. Cl.: G21K 5/04, G21K 5/00, G21K 5/10

(54) **ELECTRON BEAM RADIATION DEVICE AND ELECTRON BEAM RADIATION METHOD**

(30) Priority: 04.08.2023 JP 2023127578
(71) Applicant: Terumo Kabushiki Kaisha, Tokyo 151-0072 (JP)
(72) Inventor: ARISAKA, Akio, Fujinomiya-shi, Shizuoka 418-0015 (JP); MATSUHASHI, Takeshi, Fujinomiya-shi, Shizuoka 418-0015 (JP)
(74) Representative: Casalonga
(86) International application number: PCT/JP2024/027706
(87) International publication number: WO 2025/033342

(57) **Abstract**

To provide an electron beam irradiation device and an electron beam irradiation method capable of keeping a distance between an emission surface of an electron beam irradiation unit and an irradiation target object constant when a coat layer applied to the irradiation target object is irradiated with an electron beam, thereby preventing unevenness in curing from occurring in the coat layer applied to the irradiation target object.

An electron beam irradiation device 10 includes an electron beam irradiation unit 110 having an emission surface 111 from which an electron beam is emitted, an inert gas supply unit 120 having an injection port from which an inert gas is injected, a chamber portion 130 accommodating the emission surface and the injection port, a screen portion 140 located in the chamber portion and facing the emission surface, and a transport mechanism 150 configured to be able to arrange part of an irradiation target object in a space 130a located between the emission surface and the screen portion, in which the injection port is located on the emission surface side in the chamber portion and is inclined from the emission surface side toward the screen portion side, and the inert gas supply unit is configured to inject the inert gas through the injection port to a position facing the emission surface in the screen portion in a state where the part of the irradiation target object is arranged in the space located between the emission surface and the screen portion.

## Description

### Technical Field

The present invention relates to an electron beam irradiation device and an electron beam irradiation method.

### Background Art

In the field of medical products, in order to enable smooth movement of a medical long member such as a catheter and a guide wire in the body of a patient, a coating liquid (for example, a coating liquid containing a hydrophilic polymer for forming a lubricating coat layer) may be applied to a surface of the medical long member to form a coat layer on the surface of the medical long member.

In a method for producing a medical long member, operation of applying a coating liquid to a medical long member, forming a coat layer (a coat layer with the coating liquid or a coat layer obtained by drying the coating liquid) on a surface of the medical long member, and then curing the coat layer is performed. There are various methods for curing the coat layer, but a method using an ultraviolet ray is often adopted for reasons such as simplification of a device that performs irradiation with energy and reduction in production cost.

For example, Patent Literature 1 below discloses an ultraviolet curing system that irradiates a medical long member coated with a coat layer with an ultraviolet ray. The ultraviolet curing system of Patent Literature 1 includes a plurality of ultraviolet light bulbs extending in a longitudinal direction, and a housing that holds the plurality of ultraviolet light bulbs.

### Citation List

### Patent Literature

Patent Literature 1: US 2012/0319012 A

### Summary of Invention

### Technical Problem

In the method for curing the coat layer using the ultraviolet curing system of Patent Literature 1, in a state where a plurality of medical long members to which the coat layer is applied is arranged at equal intervals inside the housing, each of the medical long members is irradiated with ultraviolet rays from the plurality of ultraviolet light bulbs, thereby uniformly irradiating each part of the plurality of medical long members with ultraviolet rays.

However, in a case where the method for curing the coat layer with an ultraviolet ray is adopted, the following problems arise.

The ultraviolet ray has more energy to be absorbed by an irradiation target object and converted into heat than an electron beam. For this reason, in the method for curing the coat layer with an ultraviolet ray, the ultraviolet ray is absorbed by the irradiation target object, and heat-generating action may be caused. Thus, depending on a type of a material constituting the medical long member, heat generated during ultraviolet irradiation may cause damage such as deformation in the material constituting the medical long member, leading to deterioration of product quality. In addition, in the method for curing the coat layer with an ultraviolet ray, it generally takes about several seconds to several minutes until the coat layer is cured depending on the material forming the coat layer, and the like. Thus, in a case where the method for curing the coat layer with an ultraviolet ray is adopted, it is difficult to improve production efficiency of the medical long member.

As a solution to the problem as described above, it is conceivable to adopt a method for curing a coat layer with an electron beam capable of reducing heat-generating action due to energy applied to a medical long member and shortening a period required for curing the coat layer. However, in a case where the method for curing the coat layer with an electron beam is adopted, the following problems arise.

In a case where an electron beam is used for curing the coat layer, it is necessary to irradiate the coat layer of the medical long member with the electron beam in a state where the medical long member to which the coat layer is applied is exposed to an inert gas. Thus, a device for curing the coat layer needs to incorporate a chamber that can be filled with an inert gas and a transport mechanism for moving the medical long member to a position at which the medical long member is irradiated with the electron beam. In addition, in the method for curing the coat layer with the electron beam, due to characteristics of curing reaction, a distance between an electron beam irradiation source and the medical long member needs to be strictly kept constant to some extent as compared with the case of using irradiation with an ultraviolet ray so as not to cause unevenness in curing in the coat layer. Thus, in a case where an electron beam is used for curing the coat layer, it is necessary to devise to maintain a positional relationship between the electron beam irradiation source and the medical long member so that the distance between the electron beam irradiation source and the medical long member is not displaced during curing operation.

In particular, in a case where a long object such as a medical long member is irradiated with an electron beam, a distance between a gripping position of the medical long member and an electron beam irradiation position becomes long. In addition, in a case where the object to be cured by the electron beam is a coat layer applied to a surface of the medical long member, it is difficult to grip a portion of the medical long member where the coat layer is located, and thus it is difficult to grip both end portions of the medical long member and fix the medical long member to an electron beam irradiation device. Thus, in a case where the object to be cured by the electron beam is the coat layer applied to the surface of the medical long member, when the medical long member is moved to a position at which the medical long member is irradiated with the electron beam (for example, when the medical long member is moved into a chamber filled with an inert gas), inadvertent deformation, positional deviation, or the like, of the medical long member, which may cause displacement of the distance between the electron beam irradiation source and the medical long member, is likely to occur. Thus, there is a concern that unevenness in curing may occur in the coat layer applied to the medical long member. As described above, in a case where irradiation with an electron beam is adopted for curing the coat layer applied to the surface of the medical long member, it is assumed that unevenness in curing is likely to occur in the coat layer. However, even if the electron beam irradiation target is other than the medical long member, it is required to take measures for keeping a distance between the electron beam irradiation source and the irradiation target object constant.

The present invention has been made in view of the above problems, and an object of the present invention is to provide an electron beam irradiation device and an electron beam irradiation method capable of keeping a distance between an emission surface of an electron beam irradiation unit and an irradiation target object constant when a coat layer applied to the irradiation target object is irradiated with an electron beam, and thereby preventing unevenness in curing from occurring in the coat layer applied to the irradiation target object.

### Solution to Problem

The present invention can be achieved by any one of the following means (1) to (8).
(1) An electron beam irradiation device including: an electron beam irradiation unit having an emission surface from which an electron beam is emitted; an inert gas supply unit having an injection port from which an inert gas is injected; a chamber portion accommodating the emission surface and the injection port; a screen portion located in the chamber portion and facing the emission surface; and a transport mechanism configured to be able to arrange part of an irradiation target object in a space located between the emission surface and the screen portion, in which the injection port is located on the emission surface side in the chamber portion and is inclined from the emission surface side toward the screen portion side, and the inert gas supply unit is configured to inject an inert gas to a position facing the emission surface in the screen portion through the injection port in a state where the part of the irradiation target object is arranged in the space located between the emission surface and the screen portion.
(2) The electron beam irradiation device according to (1), in which the transport mechanism is located outside the chamber portion, the chamber portion includes a hole portion allowing the part of the irradiation target object transported by the transport mechanism to be introduced into the chamber, and the transport mechanism is configured to arrange the part of the irradiation target object in the space located between the emission surface and the screen portion through the hole portion of the chamber portion.
(3) The electron beam irradiation device according to (1) or (2), in which the transport mechanism includes a rail portion extending toward the chamber portion, and a gripping portion that is movable along the rail portion and is configured to be able to fix the part of the irradiation target object, and the transport mechanism is configured to move the gripping portion along the rail portion in a state where the irradiation target object is suspended in a direction of gravity by the gripping portion.
(4) The electron beam irradiation device according to (3), in which the irradiation target object is a medical long member including a long main body portion extending in a longitudinal direction and a hub portion arranged at one end portion of the main body portion, the main body portion includes a first region to which a lubricating coat layer to be irradiated with an electron beam is applied and a second region that is arranged closer to the one end portion than the first region and to which the lubricating coat layer is not applied, and the transport mechanism is configured to arrange the first region in the space located between the emission surface and the screen portion by moving the gripping portion in a state where only the hub portion is fixed by the gripping portion.
(5) The electron beam irradiation device according to any one of (1) to (4), in which the transport mechanism includes a rotation operation unit capable of driving rotation operation of the gripping portion in a state where the gripping portion fixes the irradiation target object.
(6) The electron beam irradiation device according to any one of (1) to (5), in which the screen portion includes a recess portion recessed to a side away from the emission surface and the injection port.
(7) An electron beam irradiation method in an electron beam irradiation device that irradiates an irradiation target object with an electron beam, the electron beam irradiation device including an electron beam irradiation unit having an emission surface from which an electron beam is emitted; an inert gas supply unit having an injection port from which an inert gas is injected; a screen portion facing the emission surface; and a transport mechanism configured to be able to arrange part of the irradiation target object in a space located between the emission surface and the screen portion, the electron beam irradiation method including injecting an inert gas from the injection port located on the emission surface side to the irradiation target object in a state where the part of the irradiation target object is arranged in the space located between the emission surface and the screen portion, and irradiating the irradiation target object with the electron beam from the emission surface in a state where the irradiation target object is in contact with the screen portion with the inert gas.
(8) The electron beam irradiation method according to (7), in which the transport mechanism includes a rail portion and a gripping portion that is movable along the rail portion and is configured to be able to fix the part of the irradiation target object, the irradiation target object is a medical long member that includes a long main body portion extending in a longitudinal direction and a hub portion arranged at one end portion of the main body portion, the main body portion includes a first region to which a lubricating coat layer to be irradiated with an electron beam is applied and a second region that is arranged on a proximal end side of the first region and to which the lubricating coat layer is not applied, and the transport mechanism moves the gripping portion in a state where only the hub portion is fixed by the gripping portion, and the first region is irradiated with an electron beam while an inert gas is injected toward the irradiation target object in a state where the first region is arranged in the space located between the emission surface and the screen portion.

### Advantageous Effects of Invention

In the electron beam irradiation device of (1), the injection port of the inert gas supply unit that supplies the inert gas is located on the emission surface side of the electron beam irradiation unit that emits the electron beam in the chamber portion, and is inclined from the emission surface side of the electron beam irradiation unit toward the screen portion side. The inert gas supply unit injects the inert gas through the injection port to a position facing the emission surface of the electron beam irradiation unit in the screen portion in a state where the part of the irradiation target object is arranged in the space in the chamber portion located between the emission surface of the electron beam irradiation unit and the screen portion. The part of the irradiation target object to which the inert gas is injected comes into contact with the screen portion. The electron beam irradiation device can keep the distance between the emission surface of the electron beam irradiation unit and the irradiation target object constant by bringing the part of the irradiation target object into contact with the screen portion by the inert gas. The electron beam irradiation device emits an electron beam from the emission surface of the electron beam irradiation unit to the irradiation target object while keeping the distance between the emission surface of the electron beam irradiation unit and the irradiation target object constant, thereby preventing unevenness in curing from occurring in the coat layer applied to the irradiation target object.

In the electron beam irradiation method of (7), in a state where the part of the irradiation target object is arranged in the space located between the emission surface of the electron beam irradiation unit that emits the electron beam and the screen portion, the inert gas is injected to the irradiation target object from the injection port of the inert gas supply unit located on the emission surface side of the electron beam irradiation unit, thereby the irradiation target object can be brought into contact with the screen portion. In the electron beam irradiation method, the distance between the emission surface of the electron beam irradiation unit and the irradiation target object can be kept constant by bringing the irradiation target object into contact with the screen portion. In the electron beam irradiation method, the electron beam is emitted from the emission surface of the electron beam irradiation unit to the irradiation target object while the distance between the emission surface of the electron beam irradiation unit and the irradiation target object is kept constant, so that the unevenness in curing can be prevented from occurring in the coat layer applied to the irradiation target object.

### Brief Description of Drawings

Fig. 1 is a plan view illustrating an electron beam irradiation device according to a first embodiment of the present invention.
Fig. 2 is a side view illustrating the electron beam irradiation device according to the first embodiment of the present invention as viewed from an arrow 2A direction in Fig. 1.
Fig. 3 is a view illustrating a workpiece guide included in the electron beam irradiation device according to the first embodiment, and is a cross-sectional view corresponding to an arrow 3A-3A in Fig. 1.
Fig. 4 is a view for explaining operation of the workpiece guide included in the electron beam irradiation device according to the first embodiment.
Fig. 5 is a view for explaining an electron beam irradiation method using the electron beam irradiation device according to the first embodiment, and is a view illustrating a state before an electron beam is emitted from an electron beam irradiation unit and a state before an inert gas is injected from an inert gas supply unit.
Fig. 6 is a view for explaining the electron beam irradiation method using the electron beam irradiation device according to the first embodiment, and is a view illustrating a state in which the electron beam is emitted from the electron beam irradiation unit and a state in which the inert gas is injected from the inert gas supply unit.
Fig. 7 is a view for explaining the electron beam irradiation method using the electron beam irradiation device according to the first embodiment, and is a cross-sectional view illustrating the vicinity of a screen portion.
Fig. 8 is a view for explaining the electron beam irradiation method using the electron beam irradiation device according to the first embodiment, and is a cross-sectional view illustrating the vicinity of the screen portion.
Fig. 9 is a view for explaining the electron beam irradiation method using the electron beam irradiation device according to the first embodiment, and is an enlarged cross-sectional view of a recess portion of the screen portion.
Fig. 10 is a view for explaining the electron beam irradiation method using the electron beam irradiation device according to the first embodiment, and is an enlarged cross-sectional view of the recess portion of the screen portion.
Fig. 11 is a view for explaining an electron beam irradiation method according to a comparative example.
Fig. 12 is a view for explaining the electron beam irradiation method according to the comparative example.
Fig. 13 is a view for explaining the electron beam irradiation method according to the comparative example.
Fig. 14 is a cross-sectional view illustrating a screen portion according to Modification 1.
Fig. 15 is a cross-sectional view illustrating a screen portion according to Modification 2.
Fig. 16 is a plan view illustrating an electron beam irradiation device according to a second embodiment of the present invention.
Fig. 17 is a side view illustrating the electron beam irradiation device according to the second embodiment of the present invention as viewed from a arrow 17A direction in Fig. 16.
Fig. 18 is a view for explaining an electron beam irradiation method using the electron beam irradiation device according to the second embodiment.

### Description of Embodiments

Hereinafter, embodiments of the present invention will be described with reference to the accompanying drawings. The following description does not limit the technical scope or the significance of each term disclosed in the claims. Furthermore, dimensional ratios of the drawings are exaggerated for illustration purpose and may differ from actual ratios.

### <First Embodiment>

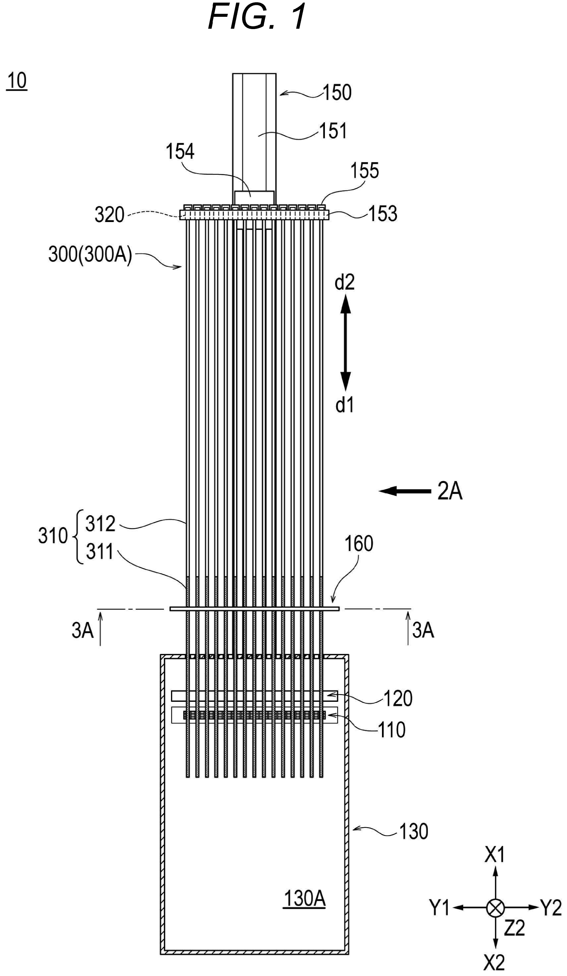

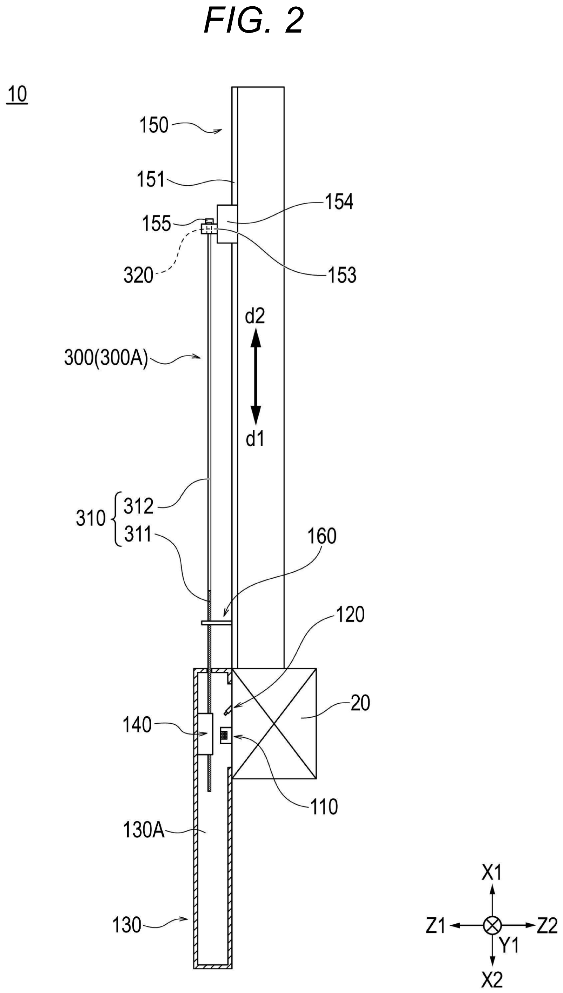

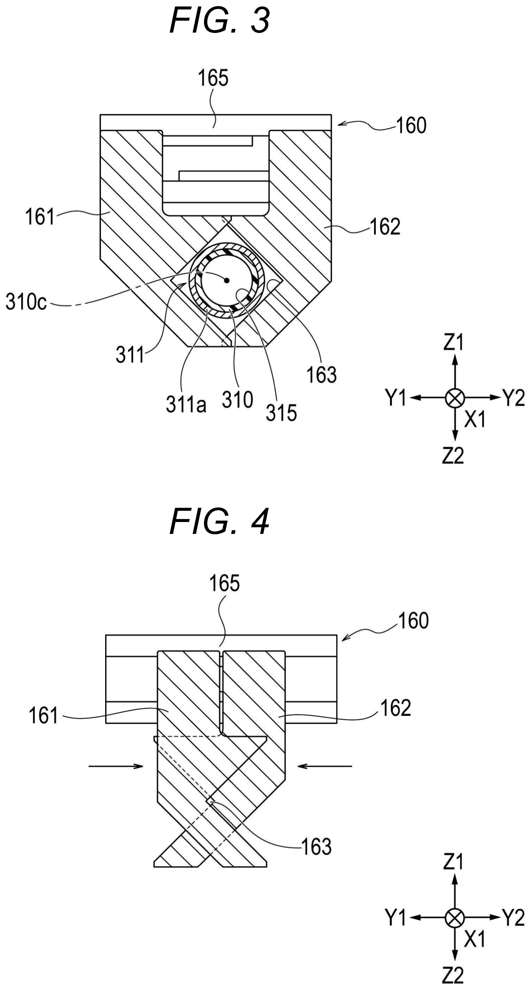

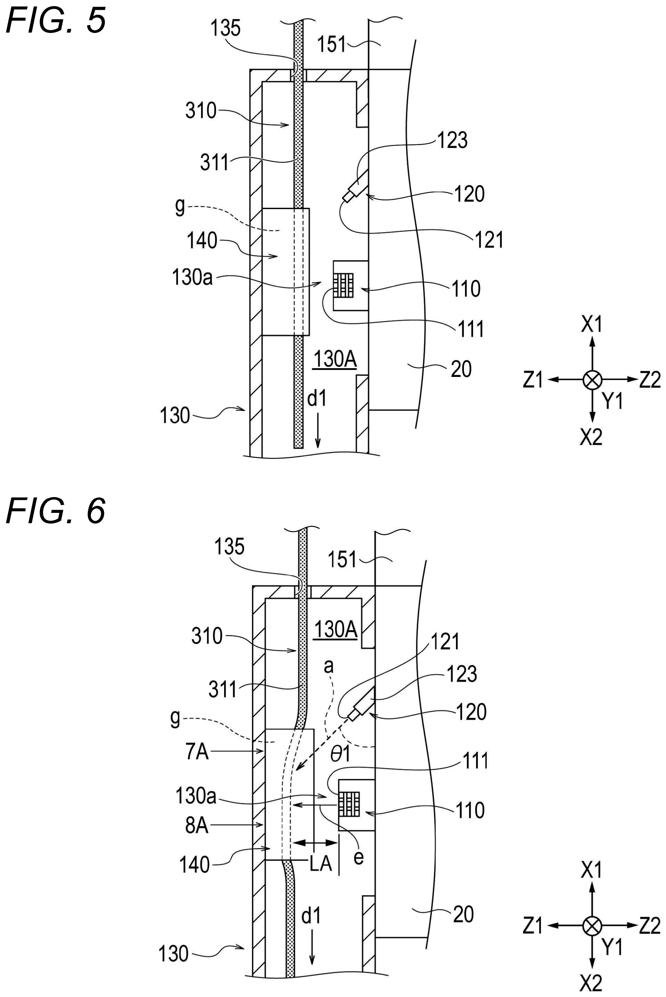

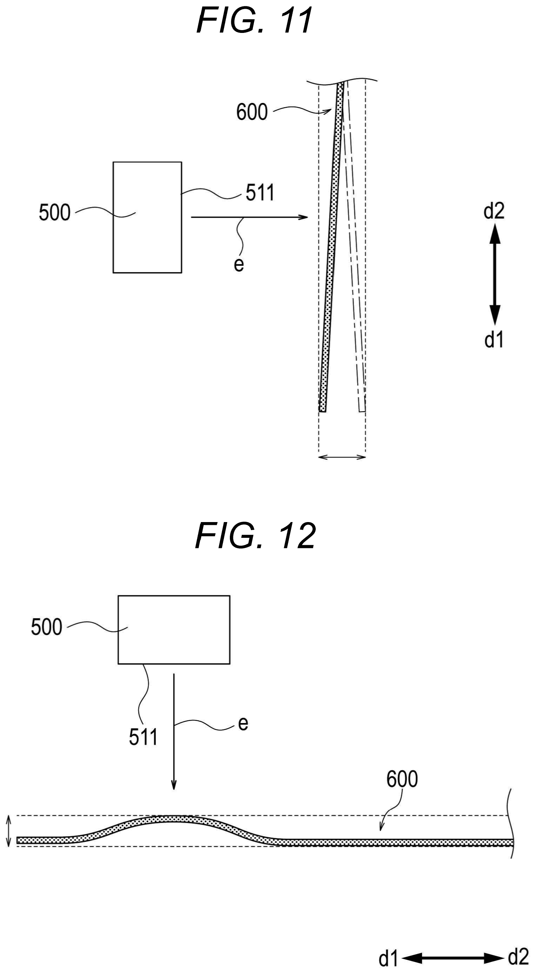

Figs. 1 and 2 are views illustrating a simplified overall configuration of an electron beam irradiation device 10 according to the present embodiment. Note that Figs. 1 and 2 are partial cross-sectional views illustrating a chamber portion 130 in cross section so that the inside of the chamber portion 130 can be seen. Figs. 3 and 4 are views illustrating a workpiece guide 160 included in the electron beam irradiation device 10. Figs. 5 to 10 are views for explaining an electron beam irradiation method using the electron beam irradiation device 10. Figs. 11 to 13 are views for explaining problems that occur in comparative examples.

### (Electron Beam Irradiation Device 10)

Briefly referring to Figs. 1, 2, 6, and 8, the electron beam irradiation device 10 includes an electron beam irradiation unit 110 having an emission surface 111 from which an electron beam is emitted, an inert gas supply unit 120 having an injection port 121 from which an inert gas is injected, a chamber portion 130 accommodating the emission surface 111 and the injection port 121, a screen portion 140 located in the chamber portion 130 and facing the emission surface 111, and a transport mechanism 150 configured to be able to arrange part of the irradiation target object 300 in a space 130a located between the emission surface 111 and the screen portion 140.

In the description of the present specification, a direction in which the transport mechanism 150 transports the irradiation target object 300 toward the chamber portion 130 will be referred to as a "first transport direction d1", and a direction in which the transport mechanism 150 transports the irradiation target object 300 toward a side away from the chamber portion 130 will be referred to as a "second transport direction d2". In each drawing, a longitudinal direction of the electron beam irradiation device 10 (a direction in which a rail portion 151 described later extends) is indicated by arrows X1 to X2, a width direction of the electron beam irradiation device 10 orthogonal to the longitudinal direction in plan view is indicated by arrows Y1 to Y2, and a height direction of the electron beam irradiation device 10 orthogonal to each of the longitudinal direction and the width direction is indicated by arrows Z1 to Z2. In the following description, each direction of the electron beam irradiation device 10 will be also simply referred to as a "longitudinal direction", a "width direction", and a "height direction".

In the present embodiment, a medical long member 300A including a long main body portion 310 extending in the longitudinal direction is exemplified as an irradiation target object 300. In addition, the electron beam irradiation device 10 is configured to simultaneously irradiate the 15 medical long members 300A arranged at predetermined intervals in the width direction with an electron beam. However, a specific type and shape of the irradiation target object 300, the number of irradiation target objects that can be set in the electron beam irradiation device 10, and the like, are not particularly limited.

In the present embodiment, each of the 15 medical long members 300A has the same configuration. Thus, one medical long member 300A will be described, and description of other medical long portions will be omitted. Similarly, one configuration among the same configurations provided corresponding to the 15 medical long members 300A in the electron beam irradiation device 10 will be described, and description of other configurations will be appropriately omitted.

### (Chamber Portion 130)

As illustrated in Figs. 2, 5, and 6, the chamber portion 130 includes an internal space 130A in which the electron beam irradiation unit 110 and the inert gas supply unit 120 are accommodated.

As illustrated in Figs. 5 and 6, the chamber portion 130 has a hole portion 135 that allows part of the irradiation target object 300 transported by the transport mechanism 150 to be introduced into the chamber portion 130.

The hole portion 135 is provided in part of a wall located on the second transport direction d2 side in the chamber portion 130. In the present embodiment, the chamber portion 130 has 15 hole portions 135 corresponding to the number of the irradiation target objects 300.

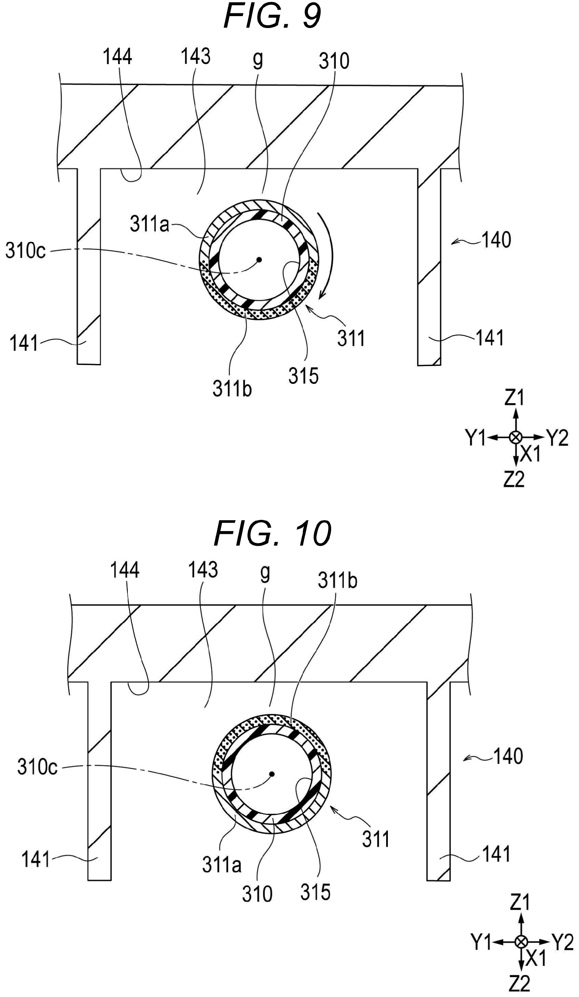

The hole portion 135 can be configured to have a shape corresponding to the cross-sectional shape of the medical long member 300A. In the present embodiment, the medical long member 300A has a substantially circular cross-sectional shape (see Figs. 9 and 10). Thus, the hole portion 135 has a circular shape through which the medical long member 300A can be inserted. However, the shape of the hole portion 135 is not particularly limited as long as the irradiation target object 300 can be inserted.

The chamber portion 130 can be provided with an opening/closing mechanism (shutter unit) (not illustrated) for opening and closing the hole portion 135. Upon replacement of a gas in the chamber portion 130 with an inert gas, the electron beam irradiation device 10 operates the opening/closing mechanism to close the hole portion 135. Further, the electron beam irradiation device 10 operates the opening/closing mechanism to open the hole portion 135 to move the medical long member 300A into the chamber portion 130.

As illustrated in Fig. 2, a device main body 20 is arranged in a lower portion of the chamber portion 130 in the height direction. The device main body 20 includes a control unit for controlling emission and stop of emission of the electron beam from the emission surface 111 of the electron beam irradiation unit 110 and injection and stop of injection of the inert gas from the injection port 121 of the inert gas supply unit 120, a drive source (motor) necessary for driving operation of each unit of the device, and the like. In each drawing, the electron beam emitted from the emission surface 111 of the electron beam irradiation unit 110 is indicated by an arrow e, and the inert gas injected from the injection port 121 of the inert gas supply unit 120 is indicated by an arrow a.

The chamber portion 130 has a predetermined length along the longitudinal direction. The length of the chamber portion 130 in the longitudinal direction (the length of the internal space 130A in the longitudinal direction) is arbitrarily set according to a length of a portion to be irradiated with the electron beam in the irradiation target object 300 along the longitudinal direction. For example, in a case where the portion to be irradiated with the electron beam is the first region 311 of the main body portion 310 of the medical long member 300A as in the present embodiment, the length in the longitudinal direction of the chamber portion 130 can be configured to be a length that can accommodate the entire range in the longitudinal direction of the first region 311.

### (Transport Mechanism 150)

As illustrated in Figs. 1 and 2, the transport mechanism 150 is located outside the chamber portion 130.

As illustrated in Figs. 5 and 6, the transport mechanism 150 is configured to arrange part (first region 311) of the medical long member 300A in the space 130a located between the emission surface 111 and the screen portion 140 through the hole portion 135 of the chamber portion 130.

The "space 130a located between the emission surface 111 and the screen portion 140" is configured by part of the internal space 130A of the chamber portion 130. Specifically, in the internal space 130A, a region located between the emission surface 111 of the electron beam irradiation unit 110 and the screen portion 140 corresponds to the "space 130a".

As illustrated in Figs. 1 and 2, the transport mechanism 150 includes the rail portion 151 extending toward the chamber portion 130, and a gripping portion 153 movable along the rail portion 151 and configured to be able to fix part of the medical long member 300A.

The rail portion 151 extends substantially linearly along the longitudinal direction of the electron beam irradiation device 10. In the present embodiment, a direction in which the rail portion 151 extends is substantially the same as the longitudinal direction of the medical long member 300A.

The gripping portion 153 is configured to fix a hub portion 320 arranged at one end portion of the medical long member 300A. The "one end portion of the medical long member 300A" is a portion corresponding to a proximal end portion of the medical long member 300A, and is an end portion on a side which is to be gripped and operated by a medical worker such as a doctor with fingers, or the like, in procedure using the medical long member 300A.

The gripping portion 153 can be configured to be connectable and separable to and from the rail portion 151. In a case where the gripping portion 153 is configured to be connectable and separable to and from the rail portion 151, the operator can fix the medical long member 300A to the gripping portion 153 in a state where the gripping portion 153 is separated from the rail portion 151 in a preparation stage of starting irradiation of the medical long member 300A with the electron beam by the electron beam irradiation device 10. In addition, the operator can connect the gripping portion 153 to the rail portion 151 in a state where the medical long member 300A is fixed to the gripping portion 153. Note that the gripping portion 153 may have a configuration in which the gripping portion 153 is neither connectable nor separable to or from the rail portion 151.

The gripping portion 153 is connectable to the rail portion 151 via a slide portion 154. The rail portion 151 is configured to be linearly movable along the slide portion 154. If the slide portion 154 moves along the rail portion 151, the gripping portion 153 moves along the rail portion 151 in conjunction with the movement of the slide portion 154.

The gripping portion 153 can be configured to include, for example, a chuck portion for mechanically detachably fixing the hub portion 320 by fitting the hub portion 320 to the gripping portion 153. However, a specific configuration of the gripping portion 153 is not particularly limited as long as at least part of the medical long member 300A can be fixed and released. Further, the portion where the medical long member 300A is fixed to the gripping portion 153 may be a portion other than the hub portion 320.

As illustrated in Figs. 1 and 2, the transport mechanism 150 includes a rotation operation unit 155 capable of driving rotation operation of the gripping portion 153 in a state where the medical long member 300A is fixed to the gripping portion 153.

The rotation operation unit 155 is integrally formed with the gripping portion 153. If rotation of the rotation operation unit 155 is driven in a state where the gripping portion 153 fixes the hub portion 320, the hub portion 320 rotates in conjunction with the operation of the rotation operation unit 155 while maintaining the state of being fixed by the gripping portion 153. The rotation operation unit 155 can rotate the medical long member 300A around a central axis 310c of the main body portion 310 of the medical long member 300A (see Figs. 9 and 10).

As illustrated in Figs. 3 and 4, the electron beam irradiation device 10 includes a workpiece guide 160 arranged at a predetermined position of the rail portion 151. Fig. 3 is a cross-sectional view taken along an arrow 3A-3A illustrated in Fig. 1.

The workpiece guide 160 has a role of guiding movement of the medical long member 300A outside the chamber portion 130.

As illustrated in Figs. 3 and 4, the workpiece guide 160 includes a first guide portion 161 and a second guide portion 162 configured to be able to approach and separate from each other.

As illustrated in Fig. 3, in a state where the first guide portion 161 and the second guide portion 162 are arranged with a predetermined distance, a support hole 163 for supporting the medical long member 300A in an inserted state is formed between the first guide portion 161 and the second guide portion 162. When the transport mechanism 150 transports the medical long member 300A, the electron beam irradiation device 10 can smoothly move the medical long member 300A along each of transport directions d1 and d2 by supporting part of the medical long member 300A in the support hole 163.

A size of the support hole 163 formed between the first guide portion 161 and the second guide portion 162 can be adjusted by changing a distance between the first guide portion 161 and the second guide portion 162. For example, as illustrated in Fig. 4, the size of the support hole 163 can be reduced by reducing the distance between the first guide portion 161 and the second guide portion 162. Thus, by adjusting the size of the support hole 163 according to a size, a cross-sectional shape, and the like, of the irradiation target object 300 (medical long member 300A) to be transported by the transport mechanism 150, movement of various types of irradiation target objects 300 can be guided by the workpiece guide 160. Note that each of the guide portions 161 and 162 can be attached to the rail portion 151 via, for example, a support portion 165 in which a slide groove that slidably holds each of the guide portions 161 and 162 is formed.

As described above, the electron beam irradiation device 10 of the present embodiment has a configuration capable of simultaneously irradiating up to 15 medical long members 300A with the electron beam. Thus, in the electron beam irradiation device 10, 15 gripping portions 153, rotation operation units 155, and workpiece guides 160 are installed.

As illustrated in Figs. 1 and 2, the transport mechanism 150 is configured to move the gripping portion 153 along the rail portion 151 in a state where the medical long member 300A is suspended in the direction of gravity by the gripping portion 153.

When the medical long member 300A is transported, the transport mechanism 150 is in a suspended state (a state in which the medical long member 300A is stretched in a natural state in which no external force is applied to the main body portion 310 of the medical long member 300A) such that the other end portion (corresponding to a "distal end portion" of the medical long member 300A) located on the opposite side of the one end portion where the hub portion 320 is located is arranged on the lower side in the direction of gravity in a state where the hub portion 320 is fixed to the gripping portion 153. The transport mechanism 150 can linearly move the medical long member 300A along the first transport direction d1 and the second transport direction d2 while maintaining the medical long member 300A in the suspended state as described above.

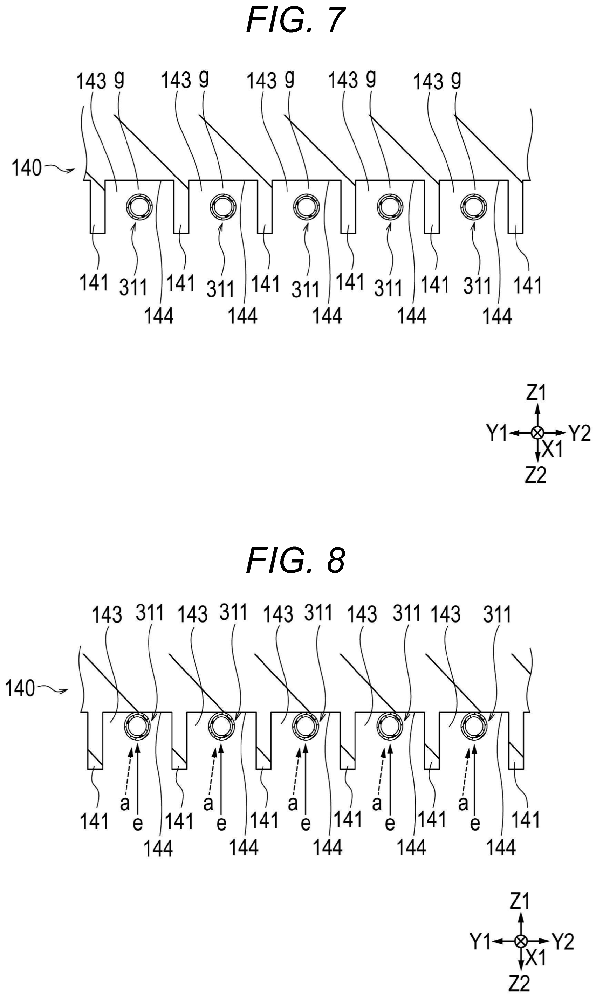

As illustrated in Figs. 5 and 7, the transport mechanism 150 is configured to transport the medical long member 300A in a state where a gap g is formed between the screen portion 140 and the medical long member 300A in a state where the inert gas is not injected from the injection port 121 of the inert gas supply unit 120.

In the irradiation of the electron beam using the electron beam irradiation device 10, in a stage before the irradiation of the first region 311 of the main body portion 310 of the medical long member 300A with the electron beam is started, spraying of the inert gas from the inert gas supply unit 120 to the medical long member 300A in the chamber portion 130 is not performed. In this state, the medical long member 300A is in a non-contact state with the screen portion 140. Thus, before the inert gas is sprayed from the inert gas supply unit 120 to the medical long member 300A, the transport mechanism 150 can move the medical long member 300A in a state where the predetermined gap g is provided between the screen portion 140 and the medical long member 300A.

### (Electron Beam Irradiation Unit 110)

As illustrated in Figs. 5 and 6, the electron beam irradiation unit 110 includes the emission surface 111 arranged to face a direction in which the electron beam is emitted.

The electron beam irradiation unit 110 is arranged on the same side as the side where the inert gas supply unit 120 is arranged in the internal space 130A of the chamber portion 130. In other words, the electron beam irradiation unit 110 and the inert gas supply unit 120 are arranged on the side facing the screen portion 140 in the height direction (arrow Z1-Z2 direction) of the chamber portion 130.

Between the screen portion 140 and the emission surface 111 of the electron beam irradiation unit 110, the space 130a exists on the extension in the injection direction of the inert gas injected from the inert gas supply unit 120.

The emission surface 111 is arranged so as to emit the electron beam along a direction substantially perpendicular to the screen portion 140 arranged so as to face the electron beam irradiation unit 110 in the internal space 130A of the chamber portion 130.

Energy of the electron beam emitted from the emission surface 111 of the electron beam irradiation unit 110 can be arbitrarily set according to a material to be cured by the electron beam, or the like. In a case where a lubricating coat layer 311a applied to the medical long member 300A is to be cured as in the present embodiment, the energy of the electron beam can be set to, for example, 10 keV to 500 keV.

### (Inert Gas Supply Unit 120)

As illustrated in Figs. 5 and 6, the inert gas supply unit 120 includes an injection port 121 and a nozzle main body 123. The injection port 121 is arranged at one end portion of the nozzle main body 123.

The injection port 121 of the inert gas supply unit 120 is located on the emission surface 111 side of the electron beam irradiation unit 110 in the chamber portion 130 and is inclined from the emission surface 111 side toward the screen portion 140 side. Thus, as illustrated in Fig. 6, the inert gas injected from the injection port 121 is injected obliquely forward toward the screen portion 140 along the inclination direction of the injection port 121.

As illustrated in Fig. 6, the inert gas supply unit 120 injects the inert gas from the injection port 121 in a state where part of the medical long member 300A (part of the first region 311) is arranged in the space 130a located between the emission surface 111 of the electron beam irradiation unit 110 and the screen portion 140. The inert gas injected from the injection port 121 is injected toward a position facing the emission surface 111 of the electron beam irradiation unit 110 in the screen portion 140.

The inert gas injected from the injection port 121 of the inert gas supply unit 120 toward the space 130a moves part of the medical long member 300A arranged in the space 130a toward the screen portion 140. The inert gas supply unit 120 brings the part of the medical long member 300A into contact with the screen portion 140 arranged at a position facing the emission surface 111 of the electron beam irradiation unit 110 with the space 130a interposed therebetween by the inert gas injected from the injection port 121.

While the injection of the gas from the injection port 121 of the inert gas supply unit 120 is continued, the electron beam irradiation device 10 can press each part in the longitudinal direction of the medical long member 300A sequentially moved to the space 130a by the transport mechanism 150 against the screen portion 140. The electron beam irradiation device 10 can keep a distance (linear distance LA illustrated in Fig. 6) between the emission surface 111 of the electron beam irradiation unit 110 and the part of the medical long member 300A constant by pressing the part of the medical long member 300A against the screen portion 140 by the inert gas injected from the injection port 121 of the inert gas supply unit 120.

The electron beam irradiation device 10 can move the medical long member 300A along the first transport direction d1 by the transport mechanism 150 while emitting the electron beam from the emission surface 111 of the electron beam irradiation unit 110 in a state where the distance between the emission surface 111 of the electron beam irradiation unit 110 and the part of the medical long member 300A is kept constant. Thus, the electron beam irradiation device 10 can continuously emit the electron beam to each part in the longitudinal direction of the medical long member 300A in a state where the distance between the emission surface 111 of the electron beam irradiation unit 110 and each part in the longitudinal direction of the medical long member 300A is kept constant. As a result, the electron beam irradiation device 10 can prevent occurrence of unevenness in curing at each part in the longitudinal direction of the first region 311 of the medical long member 300A.

As the inert gas to be used in the electron beam irradiation device 10, for example, helium gas, neon gas, argon gas, xenon gas, nitrogen gas, or the like, can be used.

An injection pressure X MPa of the inert gas injected from the injection port 121 of the inert gas supply unit 120 can be set, for example, in a range of 0.01 MPa < X MPa < 1 MPa.

In a case where the electron beam irradiation device 10 is configured to include at least one inert gas supply unit 120, an injection angle θ1 (see Fig. 6) of the inert gas injected from one injection port 121 can be set, for example, in a range of 10° < θ1 < 90° (preferably 30° < θ1 < 90°).

In addition, a distance from the injection port 121 of the inert gas supply unit 120 to a bottom portion 144 of the screen portion 140 (a linear distance between the injection port 121 and the bottom portion 144 of the screen portion 140 along the injection angle θ1) can be set within a range of, for example, 0 mm < L < 500 mm.

Note that the electron beam irradiation device 10 may include a plurality of inert gas supply units. For example, when part of the medical long member 300A is pressed against the screen portion 140 by the inert gas injected from the injection port 121 of the inert gas supply unit 120, the electron beam irradiation device 10 may further reduce a positional deviation, and the like, of the medical long member by pressing other parts of the medical long member against the screen portion 140 side by the inert gas injected from the injection ports of the other inert gas supply units. In a case where the electron beam irradiation device 10 includes a plurality of inert gas supply units, the other inert gas supply units other than the inert gas supply unit 120 can be arranged at positions between the inert gas supply unit 120 and the electron beam irradiation unit 110, or at positions on the side opposite to the inert gas supply unit 120 with the electron beam irradiation unit 110 interposed therebetween on the emission surface 111 side of the electron beam irradiation unit 110 in Fig. 5. In a case where other inert gas supply units other than the inert gas supply unit 120 are arranged at the positions as described above, the injection angles of the inert gas injected from the injection ports of the other inert gas supply units can be set within the range of, for example, 10° < θ ≤ 170°.

### (Screen Portion 140)

As illustrated in Figs. 7 and 8, the screen portion 140 includes a plurality of wall portions 141 and a plurality of recess portions 143 defined between a set of wall portions 141.

Note that Fig. 7 illustrates a cross-sectional view of the screen portion 140 at a position indicated by an arrow 7A in Fig. 6 where no inert gas is sprayed, and Fig. 8 illustrates a cross-sectional view of the screen portion 140 at a position indicated by an arrow 8A in Fig. 6 where an inert gas is sprayed.

Each wall portion 141 has a shape protruding substantially vertically toward the side where the electron beam irradiation unit 110 and the inert gas supply unit 120 are arranged in the chamber portion 130. The recess portion 143 has a cross-sectional shape recessed toward a side (in the present embodiment, an arrow Z1 side) separated from the emission surface 111 of the electron beam irradiation unit 110 and the injection port 121 of the inert gas supply unit 120.

A bottom portion 144 having a substantially linear cross-sectional shape is provided at a position farthest from the emission surface 111 and the injection port 121 side in the screen portion 140. As illustrated in Figs. 6 and 8, at least part of the first region 311 of the medical long member 300A comes into contact with the bottom portion 144 in a state where the inert gas is injected to the medical long member 300A.

As illustrated in Fig. 7, in a state where the inert gas is not injected from the injection port 121 of the inert gas supply unit 120 (alternatively, a portion to which the inert gas is not sprayed), the first region 311 of the main body portion 310 of the medical long member 300A is not pressed against the screen portion 140 by the inert gas. Thus, the first region 311 of the main body portion 310 of the medical long member 300A is arranged with a gap g therebetween with respect to the bottom portion 144.

As illustrated in Fig. 8, if the inert gas is injected from the injection port 121 of the inert gas supply unit 120, the first region 311 of the main body portion 310 of the medical long member 300A is pressed against the screen portion 140 by the inert gas. Thus, the first region 311 of the main body portion 310 of the medical long member 300A is in contact with the bottom portion 144. As described above, in the electron beam irradiation method of the present embodiment, the electron beam is emitted from the emission surface 111 of the electron beam irradiation unit 110 toward the space 130a in a state where the first region 311 of the main body portion 310 of the medical long member 300A is in contact with the screen portion 140 (the bottom portion 144 of the screen portion 140) (see Fig. 6).

### (Medical Long Member 300A)

As illustrated in Figs. 1 and 2, the medical long member 300A includes a long main body portion 310 extending in the longitudinal direction and a hub portion 320 arranged at one end portion of the main body portion 310.

As illustrated in Figs. 1, 2, 9, and 10, the main body portion 310 of the medical long member 300A can be configured to have the first region 311 to which a lubricating coat layer 311a to be irradiated with the electron beam is applied and the second region 312 which is arranged on one end side (proximal end side) of the first region 311 and to which the lubricating coat layer 311a is not applied.

The region to be irradiated with the electron beam in the medical long member 300A is the first region 311 to which the lubricating coat layer 311a is applied. Thus, upon operation of irradiating the electron beam, the transport mechanism 150 moves the medical long member 300A along each of the transport directions d1 and d2 at least within a range in which the first region 311 is arranged in the space 130a in the chamber portion 130.

The transport mechanism 150 is configured to arrange the first region 311 of the medical long member 300A in the space 130a in the chamber portion 130 by moving the gripping portion 153 in a state where only the hub portion 320 of the medical long member 300A is fixed by the gripping portion 153. Thus, while the lubricating coat layer 311a is cured by irradiation with the electron beam, in the medical long member 300A, only the hub portion 320 is directly applied with gripping force (external force) by being gripped by the transport mechanism 150.

The main body portion 310 of the medical long member 300A can be constituted with, for example, a resin-made tubular member having a lumen 315 (see Figs. 9 and 10) therein. In a case where the main body portion 310 of the medical long member 300A is constituted with the resin-made tubular member, examples of a material constituting the main body portion 310 include a polymer material such as a polyamide resin, a polyolefin resin such as a polyethylene resin or a polypropylene resin, a modified polyolefin resin, a cyclic polyolefin resin, an epoxy resin, a urethane resin, a diallyl phthalate resin (allyl resin), a polycarbonate resin, a fluororesin, an amino resin (urea resin, melamine resin, benzoguanamine resin), a polyester resin, a styrol resin, an acrylic resin, a polyacetal resin, a vinyl acetate resin, a phenol resin, a vinyl chloride resin, a silicone resin (silicon resin), a polyether resin, or a polyimide resin, a mixture thereof, or a polymer material of the above two or more types. Note that the main body portion 310 of the medical long member 300A may contain a linear metal material as a reinforcing member inside the resin material. In such a case, examples of the metal material include a nickel-titanium alloy, a cobalt-chromium alloy, a magnesium alloy, stainless steel, platinum, and tungsten.

The medical long member 300A is, for example, a catheter including the long main body portion 310 and the hub portion 320. Specifically, the catheter is an angiography catheter, a support catheter, a microcatheter, a balloon catheter, or the like.

Furthermore, the medical long member 300A can also be constituted with, for example, a guide wire known in the medical field. In a case where the medical long member 300A is constituted with a guide wire, the hub portion 320 does not have to be attached to one end portion of the medical long member 300A. In addition, in a case where the medical long member 300A is constituted with a guide wire, examples of the constituent material include a superelastic alloy such as a nickel-titanium alloy or a copper-zinc alloy, and a metal material such as stainless steel.

The material constituting the lubricating coat layer 311a to be applied to the medical long member 300A may be any material as long as it absorbs water and exhibits lubricity, for example. Examples thereof include hydrophilic materials. Specific examples will be described below. In the specific examples, the term "(meth)acryl" refers to both acryl and methacryl. Thus, for example, the term "(meth)acrylic acid" encompasses both acrylic acid and methacrylic acid. Similarly, the term "(meth)acryloyl" refers to both acryloyl and methacryloyl. Thus, for example, the term "(meth)acryloyl group" refers to both an acryloyl group and a methacryloyl group.

Examples of the hydrophilic material constituting the lubricating coat layer 311a include hydrophilic polymers such as cellulose-based polymer substances such as polyvinyl pyrrolidone, polyvinyl alcohol, polyethylene oxide-based polymer substances, and carboxymethyl cellulose; acrylamide-based polymer substances such as polyacrylamide and polydimethylacrylamide; maleic anhydride-based polymer substances such as hyaluronic acid, polyacrylic acid, and a maleic anhydride-methyl vinyl ether copolymer; water-soluble nylon (registered trademark); and derivatives thereof.

The hydrophilic material constituting the lubricating coat layer 311a may be a hydrophilic copolymer containing a monomer having a reactive functional group (hereinafter, also referred to as a "reactive monomer") and a hydrophilic monomer in order to firmly fix the hydrophilic polymer to the medical long member 300A. In the present specification, the "reactive functional group" refers to a functional group capable of crosslinking reaction with another monomer or reacting (bonding) with the surface of the medical long member 300A by irradiation of the electron beam, or the like.

The reactive functional group is not particularly limited, and may be a functional group such as an epoxy group, an acid halide group, an aldehyde group, an isocyanate group, an acid anhydride group, a vinyl group, or a (meth)acryloyl group. One or a plurality of these reactive functional groups may be present in the reactive monomer.

It is preferable that the reactive monomer to be used in the present invention have a reactive functional group and be more hydrophobic in a body fluid or an aqueous solvent than at least the hydrophilic monomer used in the production of the copolymer. Specific examples of such a reactive monomer include monomers having an epoxy group in the molecule, such as glycidyl acrylate, glycidyl methacrylate (GMA), methyl glycidyl methacrylate, and allyl glycidyl ether; monomers having an acid halide group in the molecule, such as (meth)acrylic acid chloride, (meth)acrylic acid bromide, and (meth)acrylic acid iodide; monomers having an aldehyde group in the molecule, such as (meth)acrylaldehyde, crotonaldehyde, acrolein, and methacrolein; monomers having an isocyanate group in the molecule, such as (meth)acryloyloxymethyl isocyanate, (meth)acryloyloxyethyl isocyanate, (meth)acryloyloxypropyl isocyanate, and (meth)acryloyl isocyanate; monomers having an acid anhydride group in the molecule, such as maleic anhydride, itaconic anhydride, and citraconic anhydride; and monomers having a vinyl group in the molecule, such as vinyl chloride. The reactive monomer is preferably a monomer having an epoxy group in the molecule, such as glycidyl acrylate, glycidyl methacrylate (GMA), methyl glycidyl methacrylate, or allyl glycidyl ether. These reactive monomers can be used singly or in combination of two or more kinds thereof.

The hydrophilic monomer is not particularly limited, and examples thereof include acrylic acid, methacrylic acid, N-methylacrylamide, N,N-dimethylacrylamide (DMAA), acrylamide, acryloylmorpholine, N,N-dimethylaminoethyl acrylate, vinylpyrrolidone, 2-methacryloyloxyethylphosphorylcholine, 2-methacryloyloxyethyl-D-glycoside, 2-methacryloyloxyethyl-D-mannoside, vinyl methyl ether, 2-hydroxyethyl (meth)acrylate, 4-hydroxybutyl (meth)acrylate, 2-hydroxypropyl (meth)acrylate, 2-hydroxybutyl (meth)acrylate, 6-hydroxyhexyl (meth)acrylate, 1,4-cyclohexanedimethanol mono (meth)acrylate, 1-chloro-2-hydroxypropyl (meth)acrylate, diethylene glycol mono (meth)acrylate, 1,6-hexanediol mono (meth)acrylate, and, Pentaerythritol tri (meth)acrylate, dipentaerythritol penta (meth)acrylate, neopentyl glycol mono (meth)acrylate, trimethylolpropane di(meth)acrylate, trimethylolethane di (meth)acrylate, 2-hydroxy-3-phenyloxypropyl (meth)acrylate, 4-hydroxycyclohexyl (meth)acrylate, 2-hydroxy-3-phenyloxy (meth)acrylate, 4-hydroxycyclohexyl (meth)acrylate, cyclohexanedimethanol mono (meth)acrylate, poly (ethylene glycol) methyl ether acrylate, and poly (ethylene glycol) methyl ether methacrylate can be exemplified, and N,N-dimethylacrylamide, acrylamide, acrylic acid, methacrylic acid, N,N-dimethylaminoethyl acrylate, 2-hydroxyethyl acrylate, and vinylpyrrolidone are preferable. These hydrophilic monomers can be used singly or in combination of two or more kinds thereof.

The hydrophilic material constituting the lubricating coat layer 311a may be a material containing only a hydrophilic monomer in order to easily and firmly fix the hydrophilic polymer to the medical long member 300A. In that case, the hydrophilic monomer includes a (meth)acryloyl group capable of crosslinking reaction with another hydrophilic monomer or capable of reacting (bonding) with the surface of the medical long member 300A by irradiation of the electron beam. Such a hydrophilic monomer is, for example, a hydrophilic monomer including a (meth)acryloyl group among the above-described hydrophilic monomers. The material containing only a hydrophilic monomer is a material in which a hydrophilic monomer containing a (meth)acryloyl group is used alone or in combination of two or more kinds among the hydrophilic monomers described above.

The hub portion 320 can be constituted with a material harder than the main body portion 310. Examples of the material constituting the hub portion 320 include polyethylene, polypropylene, polyamide, polycarbonate, and polystyrene.

### (Electron Beam Irradiation Method)

Next, an electron beam irradiation method according to the present embodiment will be described.

The electron beam irradiation method according to the present embodiment is, in the electron beam irradiation device 10 that irradiates the medical long member 300A with the electron beam, the electron beam irradiation device 10 including the electron beam irradiation unit 110 having the emission surface 111 from which the electron beam is emitted, the inert gas supply unit 120 having the injection port 121 through which the inert gas is injected, the screen portion 140 facing the emission surface 111, and the transport mechanism 150 configured to be able to arrange part of the medical long member 300A in the space 130a located between the emission surface 111 and the screen portion 140, the electron beam irradiation method including injecting the inert gas from the injection port 121 located on the emission surface 111 side to the medical long member 300A in a state where the part of the medical long member 300A is arranged in the space 130a located between the emission surface 111 and the screen portion 140, and irradiating the medical long member 300A with the electron beam from the emission surface 111 while the medical long member 300A is in contact with the screen portion 140 with the inert gas.

Hereinafter, each step of the electron beam irradiation method will be described.

As illustrated in Figs. 1 and 2, the operator fixes the medical long member 300A to the gripping portion 153. In the present embodiment, 15 medical long members 300A are set in the width direction (laterally aligned direction) of the electron beam irradiation device 10.

The operator fixes only the hub portion 320 of the medical long member 300A to the gripping portion 153. The operator fixes the medical long member 300A to the gripping portion 153 in a state where the gripping portion 153 is separated from the rail portion 151. The hub portion 320 is constituted with a material harder than the main body portion 310. Thus, in the electron beam irradiation device 10, by fixing only the hub portion 320 of the medical long member 300A to the gripping portion 153, it is possible to prevent inadvertent deformation or collapse of a portion of the main body portion 310 other than the hub portion 320.

Next, the operator connects the gripping portion 153 to the rail portion 151.

Next, the operator sends an instruction to start the electron beam irradiation operation by the electron beam irradiation device 10 to the electron beam irradiation device 10. In a case where the electron beam irradiation device 10 includes an operation start button, the operator can start the operation by pressing the operation start button. The operator can also transmit an operation start command to the electron beam irradiation device 10 by operating an information terminal device, an external controller, or the like.

If the instruction to start operation is issued from the operator, the electron beam irradiation device 10 injects an inert gas (for example, nitrogen gas) from the inert gas supply unit 120 to start inert gas purge. In this event, the electron beam irradiation device 10 sends nitrogen gas from the inert gas supply unit 120 into the chamber portion 130, and removes the gas in the chamber portion 130 by replacing the gas in the chamber portion 130 with the inert gas. The electron beam irradiation device 10 can include a discharge mechanism (not illustrated) (such as a duct and an exhaust pump) for discharging the gas in the chamber portion 130 to the outside of the chamber portion 130. Note that while the inert gas purge is performed, the hole portion 135 is maintained in a closed state by the opening/closing mechanism (not illustrated).

After the inside of the chamber portion 130 reaches a predetermined oxygen concentration, the electron beam irradiation device 10 emits an electron beam from the emission surface 111 of the electron beam irradiation unit 110.

The electron beam irradiation device 10 opens the hole portion 135 that is in the closed state by the opening/closing mechanism (not illustrated).

The electron beam irradiation device 10 operates the transport mechanism 150 to move the gripping portion 153 to which the hub portion 320 of the medical long member 300A is fixed in the first transport direction d1 along the rail portion 151. In this event, the transport mechanism 150 moves the medical long member 300A into the chamber portion 130 by moving the gripping portion 153 along the direction of gravity in which the medical long member 300A is suspended. The medical long member 300A is introduced into the chamber portion 130 from the other end side of the medical long member 300A via the hole portion 135 in a state where only the hub portion 320 is fixed by the gripping portion 153.

As described above, the medical long member 300A can be moved along the direction of gravity in a state where the medical long member 300A is suspended by the transport mechanism 150, and thus, the electron beam irradiation device 10 can exhibit the following effects.

In general, the application of the lubricating coat layer 311a to the medical long member 300A is often performed by using dipping coat that is performed while the transport mechanism 150 moves the medical long member 300A in the same direction as the direction of gravity. Thus, in consideration of a series of production processes in which the medical long member 300A is subjected to dipping coat and then directly transferred to the operation of curing the lubricating coat layer 311a, the operation efficiency of the production process can be improved by performing the operation of curing the lubricating coat layer 311a while moving the medical long member 300A along the direction of gravity in a suspended state.

In addition, the electron beam irradiation device 10 can prevent the medical long member 300A from inadvertently coming into contact with each part of the electron beam irradiation device 10 by moving the medical long member 300A along the direction of gravity in a state where the medical long member 300A is suspended by the transport mechanism 150. For example, the gap g (see Fig. 7) can be formed between a portion where the inert gas is not sprayed in the medical long member 300A and the screen portion 140, so that it is possible to prevent the medical long member 300A from coming into contact with the screen portion 140 at an unintended portion. This results in making it possible to prevent the occurrence of peeling, falling off, and the like, of the lubricating coat layer 311a applied to the main body portion 310 of the medical long member 300A.

In addition, the electron beam irradiation device 10 can maintain an outer shape of the medical long member 300A such that the entire medical long member 300A in the longitudinal direction has a substantially linear shape by its own weight by moving the medical long member 300A along the direction of gravity in a state where the medical long member 300A is suspended by the transport mechanism 150. Thus, when the lubricating coat layer 311a applied to the medical long member 300A is irradiated with the electron beam, the electron beam irradiation device 10 can more appropriately maintain the distance between the medical long member 300A and the emission surface 111 of the electron beam irradiation unit 110.

When the medical long member 300A is moved by the transport mechanism 150, the electron beam irradiation device 10 can support part of the medical long member 300A by the workpiece guide 160 arranged between the chamber portion 130 and the gripping portion 153. Thus, when the medical long member 300A is moved by the transport mechanism 150, the electron beam irradiation device 10 can smoothly move the medical long member 300A along a linear path along the rail portion 151.

As illustrated in Figs. 5 and 6, the electron beam irradiation device 10 can move the medical long member 300A so that the medical long member 300A passes through the space 130a in the chamber portion 130 by the transport mechanism 150. When the first region 311 of the medical long member 300A passes through the space 130a, the electron beam irradiation device 10 injects the inert gas in an oblique direction from the injection port 121 of the inert gas supply unit 120 toward the screen portion 140. As an example, the inert gas supply unit 120 can inject the inert gas at an injection angle θ1 of 45° and an injection pressure of 0.05 MPa.

The injection port 121 of the inert gas supply unit 120 is inclined obliquely toward the first transport direction d1 side. Thus, the inert gas injected from the injection port 121 flows toward the first transport direction d1 side while being sprayed to the medical long member 300A. Thus, the inert gas supply unit 120 can bring the medical long member 300A into contact with the screen portion 140 over a predetermined range along the first transport direction d1 from the vicinity of the emission surface 111 of the electron beam irradiation unit 110 by the inert gas injected from the injection port 121. As a result, the electron beam irradiation device 10 can effectively prevent the medical long member 300A from shaking or bending in the chamber portion 130.

As illustrated in Fig. 6, the electron beam irradiation device 10 does not directly spray the inert gas to a portion of the medical long member 300A that is not arranged in the space 130a in the chamber portion 130. Thus, while the medical long member 300A is transported by the transport mechanism 150, the electron beam irradiation device 10 forms the gap g between the portion of the medical long member 300A that is not arranged in the space 130a and the screen portion 140. As a result, while the medical long member 300A is moved by the transport mechanism 150, the electron beam irradiation device 10 can prevent the portion not arranged in the space 130a from inadvertently coming into contact with the screen portion 140, and the lubricating coat layer 311a applied to the first region 311 from peeling off or falling off.

The electron beam irradiation device 10 injects the inert gas from the injection port 121 of the inert gas supply unit 120 to press the first region 311 of the medical long member 300A against the screen portion 140. By pressing the first region 311 of the medical long member 300A against the screen portion 140, the electron beam irradiation device 10 can keep the distance between the emission surface 111 of the electron beam irradiation unit 110 and the first region 311 of the medical long member 300A constant at the position corresponding to the space 130a.

By continuing the injection of the inert gas from the injection port 121 of the inert gas supply unit 120, the electron beam irradiation device 10 can maintain a state in which each part of the medical long member 300A is in continuous contact with the screen portion 140 when each part of the medical long member 300A in the longitudinal direction passes through the space 130a. The electron beam irradiation device 10 performs the injection of the inert gas by the inert gas supply unit 120, the movement of the medical long member 300A in the first transport direction d1 by the transport mechanism 150, and the irradiation of the electron beam from the electron beam irradiation unit 110, so that each part in the longitudinal direction of the first region 311 of the medical long member 300A sequentially arranged in the space 130a can be irradiated with the electron beam at an equal distance from the emission surface 111 in a state where the distance between the emission surface 111 of the electron beam irradiation unit 110 and the main body portion 310 of the medical long member 300A is kept constant.

As illustrated in Fig. 8, the screen portion 140 has a recess portion 143 in which the medical long member 300A is arranged when the inert gas is injected from the inert gas supply unit 120 to the first region 311 of the medical long member 300A. The recess portion 143 is recessed toward a side away from the emission surface 111 and the injection port 121. The first region 311 sprayed with the inert gas in the medical long member 300A moves so as to be separated from the injection port 121 and is accommodated in the recess portion 143. Thus, the electron beam irradiation device 10 can prevent the first region 311 of the medical long member 300A from being greatly displaced in a width direction (arrow Y1-Y2 direction). As a result, when the first region 311 of the medical long member 300A is irradiated with the electron beam, the electron beam irradiation device 10 can more reliably keep the distance between the emission surface 111 of the electron beam irradiation unit 110 and the first region 311 of the medical long member 300A constant. In addition, in a case where the electron beam irradiation device 10 is configured to simultaneously irradiate the plurality of medical long members 300A with the electron beam as in the present embodiment, the screen portion 140 can prevent inadvertent contact between the medical long members 300A adjacent to each other in the width direction (arrow Y1-Y2 direction) by the inert gas injected from the injection port 121 by the recess portion 143.

After the entire range in the longitudinal direction of the first region 311 of the medical long member 300A to be irradiated with the electron beam passes through the space 130a, the electron beam irradiation device 10 operates the rotation operation unit 155 to rotate the medical long member 300A by 180° with respect to a central axis 310c of the main body portion 310 as illustrated in Figs. 9 and 10.

The electron beam irradiation device 10 stops the injection of the inert gas from the inert gas supply unit 120 when the medical long member 300A is rotated. When the medical long member 300A is rotated, the electron beam irradiation device 10 stops the injection of the inert gas from the inert gas supply unit 120, so that it is possible to prevent the lubricating coat layer 311a from being rubbed against the screen portion 140 with the rotation of the medical long member 300A, and the lubricating coat layer 311a from falling off, or the like. In Figs. 9 and 10, a portion where the lubricating coat layer 311a is cured by the electron beam with which the first region 311 of the main body portion 310 is irradiated when the medical long member 300A is moved in the first transport direction d1 is indicated by a reference numeral 311b.

After the medical long member 300A is rotated by 180° as described above, the electron beam irradiation device 10 operates the transport mechanism 150 to move the medical long member 300A along the second transport direction d2. The electron beam irradiation device 10 allows the first region 311 of the medical long member 300A to pass through the space 130a by moving the medical long member 300A along the second transport direction d2 by the transport mechanism 150. When the first region 311 of the medical long member 300A is made to pass through the space 130a along the second transport direction d2, the electron beam irradiation device 10 injects the inert gas from the inert gas supply unit 120 and performs irradiation with the electron beam from the electron beam irradiation unit 110 similarly to when the medical long member 300A is moved along the first transport direction d1. After the medical long member 300A is rotated by 180°, the electron beam irradiation device 10 moves the medical long member 300A along the second transport direction d2 to pass through the space 130a, so that when the medical long member 300A is moved along the first transport direction d1, a surface on the other side opposite to a surface on one side in a circumferential direction irradiated with the electron beam can be irradiated with the electron beam. As a result, the electron beam irradiation device 10 can uniformly irradiate the entire range in the circumferential direction of the medical long member 300A with the electron beam.

In the present embodiment, when the first region 311 of the medical long member 300A is irradiated with the electron beam, the entire range in the longitudinal direction of the medical long member 300A is not arranged in the chamber portion 130, and only part in the longitudinal direction including the first region 311 is arranged in the chamber portion 130. Thus, the electron beam irradiation device 10 can prevent a device configuration in which a length of the chamber portion 130 in the longitudinal direction is increased.

After irradiation of the first region 311 of the medical long member 300A with the electron beam is completed, the electron beam irradiation device 10 moves the gripping portion 153 to a predetermined position (initial position on one end portion side of the rail portion 151). The operator removes the gripping portion 153 to which the medical long member 300A is fixed from the rail portion 151.

Through the above operation, the irradiation of the medical long member 300A with the electron beam is completed.

Here, with reference to Figs. 11 to 13, problems that may occur in comparative examples of the electron beam irradiation device 10 and the electron beam irradiation method according to the present embodiment will be described.

Fig. 11 illustrates a comparative example in which a medical long member 600 is irradiated with an electron beam from an electron beam irradiation unit 500 while the medical long member 600 is moved along the first transport direction d1 and the second transport direction d2 in a state where one end portion (proximal end portion) of the medical long member 600 is suspended in a weight direction by a gripping portion.

In this comparative example, only one end portion of the medical long member 600 is fixed by the gripping portion, and thus, the other end portion (distal end portion) side of the medical long member 600 is not fixed. If the medical long member 600 is moved along the first transport direction d1 and the second transport direction d2 in this state, a phenomenon in which the medical long member 600 "swings" in a direction intersecting with each of the transport directions d1 and d2 with one end portion of the medical long member 600 as a starting point occurs. If the swing of the medical long member 600 occurs in this manner, it becomes difficult to keep a distance between an emission surface 511 of the electron beam irradiation unit 500 and the medical long member 600 constant. As a result, in the medical long member 600, unevenness in curing occurs in a lubricating coat layer at each part in the longitudinal direction of the medical long member 600.

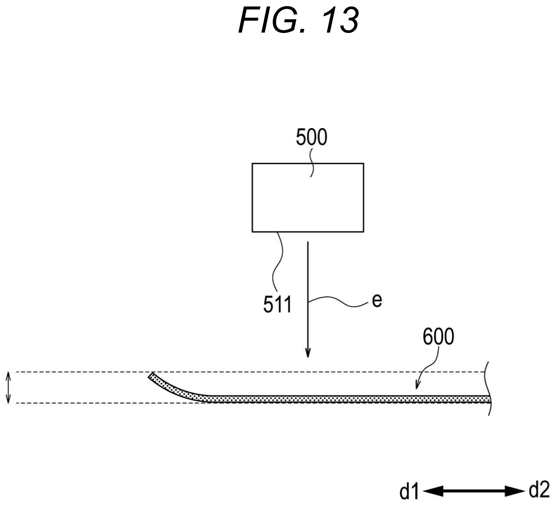

In the comparative examples of Figs. 12 and 13, the transport directions d1 and d2 of the medical long member 600 are set in a lateral direction (direction orthogonal to the direction of gravity). In a case where the transport directions d1 and d2 are set to the lateral direction, there is a concern that a phenomenon in which the medical long member 600 "floats" in a direction intersecting the transport directions d1 and d2 as illustrated in Fig. 12 or a phenomenon in which the other end portion of the medical long member 600 "warps" in a direction intersecting the transport directions d1 and d2 as illustrated in Fig. 13 may occur. In a case where such floating or warpage of the medical long member 600 occurs, it becomes difficult to keep the distance between the emission surface 511 of the electron beam irradiation unit 500 and the medical long member 600 constant as in the case where swing occurs in the medical long member 600. As a result, in the medical long member 600, unevenness in curing occurs in a lubricating coat layer at each part in the longitudinal direction of the medical long member 600.

As a measure for preventing occurrence of the problems described in each comparative example, for example, it is conceivable to adopt the following method.

For example, it is conceivable that a core metal is inserted into the medical long member 600 and transportation is performed in a state where rigidity and linearity are imparted to the medical long member 600. Even if such a measure is adopted, it is considered that it is difficult to impart sufficient rigidity and linearity in a case where the medical long member 600 has a relatively small diameter (for example, the outer diameter is 0.3 mm to 5.0 mm). In addition, the number of steps of attaching (inserting) the core metal to the medical long member 600 increases, and management of the core metal (management of bending and cleanliness) is also required, which leads to deterioration of productivity.

For example, it is conceivable that both end portions (one end portion and the other end portion) of the medical long member 600 are gripped and the medical long member 600 is transported in a state of being tensioned along the longitudinal direction thereof. In a case where such a measure is adopted, a load due to gripping is applied to the other end portion of the medical long member 600, and thus, there is a possibility that the other end portion of the medical long member 600 is crushed or deformed. In addition, in a case where the other end portion of the medical long member 600 is crushed or deformed, a step of removing a portion where the crushing or deformation occurs is further required. Furthermore, in the medical long member 600, a distal end shape such as an R shape may be added to the other end portion (distal end portion) of the medical long member 600 according to the product specification. Considering the situation in which the other end portion of the medical long member 600 has to be finally removed as described above, the measure of holding both end portions of the medical long member 600 cannot be applied to the medical long member 600 to which the distal end shape is added. Furthermore, in a case where a mechanism for gripping both end portions of the medical long member 600 is provided in the electron beam irradiation device, it is necessary to form the chamber portion in a size that can accommodate the entire medical long member 600 including both end portions. As a result, a size of the device configuration is increased, and efficiency of gas replacement of replacing gas inside of the chamber portion with the inert gas is greatly reduced.

In order to solve each problem as described above, in the present embodiment, by locally spraying the inert gas to the medical long member 300A arranged in the space 130a in the chamber portion 130, part of the medical long member 300A is brought into contact with the screen portion 140, and the distance between the medical long member 300A and the emission surface 111 of the electron beam irradiation unit 110 can be kept constant. It is therefore possible to prevent unevenness in curing of the lubricating coat layer 311a due to "swing", "floating", "warpage", or the like, of the medical long member 300A described in each comparative example. In addition, it is not necessary to insert a core metal into the medical long member 300A or to grip both end portions of the medical long member 300A as a measure against problems such as "swing", "floating", and "warpage". It is therefore possible to prevent problems associated with the use of the core metal and problems associated with the holding of both end portions of the medical long member 300A in advance. Thus, the electron beam irradiation device according to the present embodiment can be suitably used for a medical long member having a length of 10 cm or more and/or an outer diameter of 5.0 mm or less. In addition, the electron beam irradiation device 10 according to the present embodiment can be particularly suitably used for a medical long member (in particular, a catheter, a guidewire) having a length of 100 cm or more and an outer diameter of 5.0 mm or less.

As described above, the electron beam irradiation device 10 according to the present embodiment includes the electron beam irradiation unit 110 having the emission surface 111 from which the electron beam is emitted, the inert gas supply unit 120 having the injection port 121 from which the inert gas is injected, the chamber portion 130 accommodating the emission surface 111 and the injection port 121, the screen portion 140 located in the chamber portion 130 and facing the emission surface 111, and the transport mechanism 150 configured to be able to arrange part of the medical long member 300A in the space 130a located between the emission surface 111 and the screen portion 140, and the injection port 121 is located on the emission surface 111 side in the chamber portion 130 and is inclined from the emission surface 111 side toward the screen portion 140 side, and the inert gas supply unit 120 is configured to inject the inert gas through the injection port 121 to a position facing the emission surface 111 in the screen portion 140 in a state where the part of the medical long member 300A is arranged in the space 130a located between the emission surface 111 and the screen portion 140.

In the electron beam irradiation device 10, the injection port 121 of the inert gas supply unit 120 that supplies the inert gas is located on the emission surface 111 side of the electron beam irradiation unit 110 that emits the electron beam in the chamber portion 130, and is inclined from the emission surface 111 side of the electron beam irradiation unit 110 toward the screen portion 140 side. The inert gas supply unit 120 injects the inert gas through the injection port 121 to a position facing the emission surface 111 of the electron beam irradiation unit 110 in the screen portion 140 in a state where the part of the medical long member 300A is arranged in the space 130a in the chamber portion 130 located between the emission surface 111 of the electron beam irradiation unit 110 and the screen portion 140. The part of the medical long member 300A to which the inert gas is sprayed comes into contact with the screen portion 140. The electron beam irradiation device 10 can keep the distance between the emission surface 111 of the electron beam irradiation unit 110 and the medical long member 300A constant by bringing the part of the medical long member 300A into contact with the screen portion 140 with the inert gas. The electron beam irradiation device 10 emits the electron beam from the emission surface 111 of the electron beam irradiation unit 110 to the medical long member 300A in a state where the distance between the emission surface 111 of the electron beam irradiation unit 110 and the medical long member 300A is kept constant, so that it is possible to prevent unevenness in curing from occurring in the lubricating coat layer 311a applied to the medical long member 300A.

In the electron beam irradiation device 10, the transport mechanism 150 is located outside the chamber portion 130, the chamber portion 130 has the hole portion 135 that enables part of the medical long member 300A transported by the transport mechanism 150 to be introduced into the chamber portion 130, and the transport mechanism 150 is configured to arrange the part of the medical long member 300A in the space 130a located between the emission surface 111 and the screen portion 140 through the hole portion 135 of the chamber portion 130.

In the electron beam irradiation device 10 configured as described above, the transport mechanism 150 is located outside the chamber portion 130, so that it is not necessary to increase the size of the chamber portion 130 in order to accommodate the transport mechanism 150. In addition, the electron beam irradiation device 10 can introduce the medical long member 300A transported by the transport mechanism 150 into the chamber portion 130 through the hole portion 135 of the chamber portion 130, and thus, the part of the medical long member 300A can be smoothly arranged in the space 130a in the chamber portion 130.

In the electron beam irradiation device 10, the transport mechanism 150 includes the rail portion 151 extending toward the chamber portion 130 and the gripping portion 153 that is movable along the rail portion 151 and is configured to be able to fix the part of the medical long member 300A, and the transport mechanism 150 is configured to move the gripping portion 153 along the rail portion 151 in a state where the medical long member 300A is suspended in the direction of gravity by the gripping portion 153.

The electron beam irradiation device 10 configured as described above can prevent the medical long member 300A from inadvertently coming into contact with each part of the electron beam irradiation device 10 by moving the medical long member 300A along the direction of gravity in a state where the medical long member 300A is suspended by the transport mechanism 150. In particular, the gap g can be formed between the portion of the medical long member 300A to which the inert gas is not sprayed and the screen portion 140, so that it is possible to prevent the medical long member 300A from coming into contact with the screen portion 140 at an unintended portion. In addition, the electron beam irradiation device 10 can maintain an outer shape of the medical long member 300A such that the entire medical long member 300A in the longitudinal direction has a substantially linear shape by its own weight by moving the medical long member 300A along the direction of gravity in a state where the medical long member 300A is suspended by the transport mechanism 150. Thus, when the lubricating coat layer 311a applied to the medical long member 300A is irradiated with the electron beam, the electron beam irradiation device 10 can more appropriately keep the distance formed between the medical long member 300A and the emission surface 111 of the electron beam irradiation unit 110.

Further, in the electron beam irradiation device 10, the irradiation target object 300 is the medical long member 300A including the long main body portion 310 extending in the longitudinal direction and the hub portion 320 arranged at one end portion of the main body portion 310, the main body portion 310 includes the first region 311 to which the lubricating coat layer 311a to be irradiated with the electron beam is applied and the second region 312 that is arranged closer to the one end portion of the main body portion 310 than the first region 311 and to which the lubricating coat layer 311a is not applied, and the transport mechanism 150 is configured to arrange the first region 311 in the space 130a located between the emission surface 111 and the screen portion 140 by moving the gripping portion 153 in a state where only the hub portion 320 is fixed by the gripping portion 153.

In the electron beam irradiation device 10 configured as described above, in a state where only the hub portion 320 of the medical long member 300A is fixed to the gripping portion 153, the movement of the medical long member 300A and the irradiation of the first region 311 of the main body portion 310 to which the lubricating coat layer 311a is applied with the electron beam are performed. Thus, the electron beam irradiation device 10 can prevent inadvertent deformation or crushing of the main body portion 310 of the medical long member 300A from occurring while performing each kind of operation using the device 10. In addition, the electron beam irradiation device 10 moves the medical long member 300A in a state where only the hub portion 320 of the medical long member 300A is fixed to the gripping portion 153, so that it is possible to move the medical long member 300A in a state where the other end portion (distal end portion) side of the medical long member 300A is not constrained by another member. Thus, the electron beam irradiation device 10 can smoothly move the other end portion side of the medical long member 300A inside and outside the chamber portion 130.

Further, in the electron beam irradiation device 10, the transport mechanism 150 includes the rotation operation unit 155 capable of driving the rotation operation of the gripping portion 153 in a state where the gripping portion 153 fixes the medical long member 300A.

In the electron beam irradiation device 10 configured as described above, after the entire range in the longitudinal direction of the first region 311 of the medical long member 300A to be irradiated with the electron beam passes through the space 130a once, the rotation operation unit 155 is operated to rotate the medical long member 300A by 180° with respect to the central axis 310c of the main body portion 310. After the medical long member 300A is rotated by 180°, the electron beam irradiation device 10 irradiates the medical long member 300A with the electron beam while moving the medical long member 300A again to pass through the space 130a, so that both the surface on one side and the surface on the other side opposite to the surface on one side in the circumferential direction of the main body portion 310 can be irradiated with the electron beam. As a result, the electron beam irradiation device 10 can uniformly irradiate the entire range in the circumferential direction of the medical long member 300A with the electron beam.

In the electron beam irradiation device 10, the screen portion 140 has the recess portion 143 that is recessed toward a side away from the emission surface 111 and the injection port 121.

The electron beam irradiation device 10 configured as described above can be arranged such that the first region 311 of the main body portion 310 is accommodated in the recess portion 143 when the inert gas is sprayed to the medical long member 300A arranged in the space 130a. Thus, the electron beam irradiation device 10 can prevent the first region 311 of the medical long member 300A from being greatly displaced in a width direction (arrow Y1-Y2 direction). As a result, when the first region 311 of the medical long member 300A is irradiated with the electron beam, the electron beam irradiation device 10 can more reliably keep the distance between the emission surface 111 of the electron beam irradiation unit 110 and the first region 311 of the medical long member 300A constant. In addition, in a case where the electron beam irradiation device 10 is configured to simultaneously irradiate the plurality of medical long members 300A with the electron beam, the screen portion 140 can prevent inadvertent contact between the medical long members 300A adjacent in the width direction (arrow Y1-Y2 direction) by the inert gas injected from the injection port 121 by the recess portion 143.

In the electron beam irradiation method according to the present embodiment, the electron beam irradiation device 10 that irradiates the medical long member 300A with the electron beam includes the electron beam irradiation unit 110 having the emission surface 111 from which the electron beam is emitted, the inert gas supply unit 120 having the injection port 121 from which the inert gas is injected, the screen portion 140 facing the emission surface 111, and the transport mechanism 150 configured to be able to arrange part of the medical long member 300A in the space 130a located between the emission surface 111 and the screen portion 140, and the electron beam irradiation method including injecting the inert gas from the injection port 121 located on the emission surface 111 side to the medical long member 300A in a state where the part of the medical long member 300A is arranged in the space 130a located between the emission surface 111 and the screen portion 140, and irradiating the medical long member 300A with the electron beam from the emission surface 111 in a state where the medical long member 300A is in contact with the screen portion 140 by the inert gas.

In the electron beam irradiation method, in a state where the part of the medical long member 300A is arranged in the space 130a located between the emission surface 111 of the electron beam irradiation unit 110 that emit the electron beam and the screen portion 140, the inert gas is injected from the injection port 121 of the inert gas supply unit 120 located on the emission surface 111 side of the electron beam irradiation unit 110 to the medical long member 300A, whereby the medical long member 300A can be brought into contact with the screen portion 140. In the electron beam irradiation method, the distance between the emission surface 111 of the electron beam irradiation unit 110 and the medical long member 300A can be kept constant by bringing the medical long member 300A into contact with the screen portion 140. In the electron beam irradiation method, the electron beam is emitted from the emission surface 111 of the electron beam irradiation unit 110 to the medical long member 300A while the distance between the emission surface 111 of the electron beam irradiation unit 110 and the medical long member 300A is kept constant, so that it is possible to prevent unevenness in curing from occurring in the lubricating coat layer 311a applied to the medical long member 300A.

In addition, in the electron beam irradiation method, the transport mechanism 150 includes the rail portion 151 and the gripping portion 153 that is movable along the rail portion 151 and is configured to be able to fix part of the medical long member 300A, the irradiation target object 300 is the medical long member 300A including the long main body portion 310 extending in the longitudinal direction and the hub portion 320 arranged at one end portion of the main body portion 310, the main body portion 310 includes the first region 311 to which the lubricating coat layer 311a to be irradiated with the electron beam is applied and the second region 312 that is arranged closer to the one end portion than the first region 311 and to which the lubricating coat layer 311a is not applied, and the first region 311 is irradiated with the electron beam while the inert gas is injected toward the medical long member 300A in a state where the first region 311 is arranged in the space 130a located between the emission surface 111 and the screen portion 140.

In the above-described electron beam irradiation method, in a state where only the hub portion 320 of the medical long member 300A is fixed to the gripping portion 153, the movement of the medical long member 300A and the irradiation of the first region 311 of the main body portion 310 to which the lubricating coat layer 311a is applied with the electron beam are performed. Thus, in the electron beam irradiation method, it is possible to prevent inadvertent deformation or crushing of the main body portion 310 of the medical long member 300A from occurring while each kind of operation is performed by the electron beam irradiation device 10. In addition, in the electron beam irradiation method, the medical long member 300A is moved in a state where only the hub portion 320 of the medical long member 300A is fixed to the gripping portion 153, so that it is possible to move the medical long member 300A in a state where the other end portion (distal end portion) side of the medical long member 300A is not constrained by another member. Thus, in the electron beam irradiation method, the other end portion side of the medical long member 300A can be smoothly moved inside and outside the chamber portion 130.

Next, modifications and a second embodiment of the present invention will be described. In the description of the modifications and the second embodiment, description of content overlapping with the content already described will be omitted. In addition, content that is not particularly described can be the same as that in the above-described embodiment.

### <Modifications>

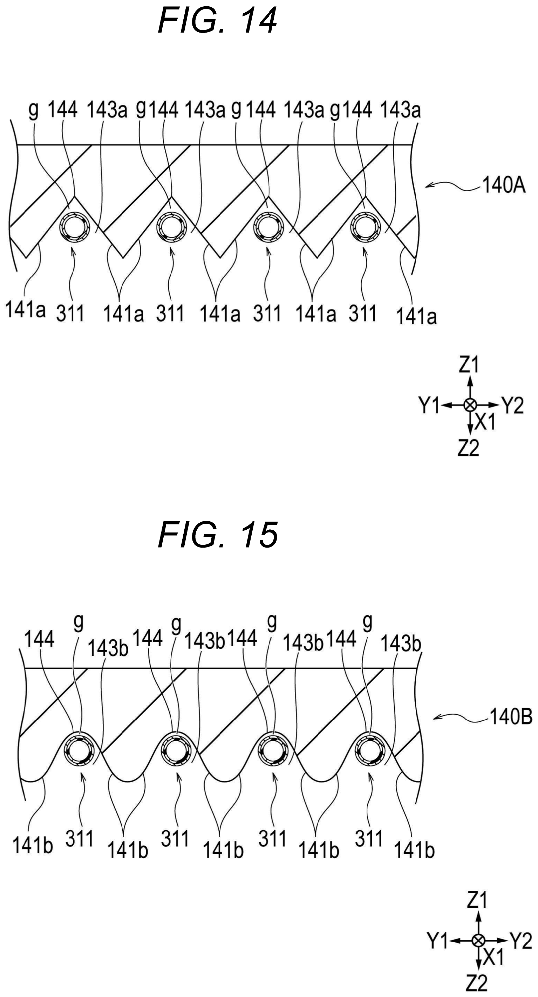

Fig. 14 illustrates a screen portion 140A according to Modification 1. Further, Fig. 15 illustrates a screen portion 140B according to Modification 2.

In the above-described embodiment, the recess portion 143 of the screen portion 140 is formed between the wall portions 141 extending substantially vertically from the bottom portion 144 (see Figs. 7 and 8). However, a structure and shape of the recess portion of the screen portion are not particularly limited.

For example, as in the screen portion 140A illustrated in Fig. 14, the recess portion 143a can also be formed between a pair of V-shaped wall portions 141a extending substantially linearly so as to spread toward the emission surface 111 side of the electron beam irradiation unit 110 and the injection port 121 side (arrow Z2 side) of the inert gas supply unit 120. Further, for example, as in the screen portion 140B illustrated in Fig. 15, the recess portion 143b can also be formed between a pair of wall portions 141b extending in a curved shape so as to spread toward the emission surface 111 side of the electron beam irradiation unit 110 and the injection port 121 side of the inert gas supply unit 120.

In a case where the screen portions 140A and 140B are configured to include the recess portions 143a and 143b formed in the cross-sectional shapes according to the respective modifications illustrated in Figs. 14 and 15, the medical long member 300A can be held in contact with the bottom portion 144 having a narrower width. Thus, by configuring the screen portions 140A and 140B so as to include recess portions having the shapes illustrated in the respective modifications, when the medical long member 300A is brought into contact with the screen portion 140, it is possible to effectively prevent the medical long member 300A from being displaced in the width direction (arrow Y1 to Y2 directions in the drawing). On the other hand, in the screen portion 140 (see Fig. 7) described in the above-described embodiment, a depth of the recess portion 143 can be set larger than that of the screen portion 140A or 140B of each modification. Thus, as compared with the screen portions 140A and 140B of the respective modifications, the screen portion 140 can effectively prevent the medical long member 300A from coming out of the recess portion 143 when the medical long member 300A arranged in the recess portion 143 is sprayed with a higher pressure inert gas. From such a viewpoint, the electron beam irradiation device 10 more preferably includes the screen portion 140.

### <Second Embodiment>

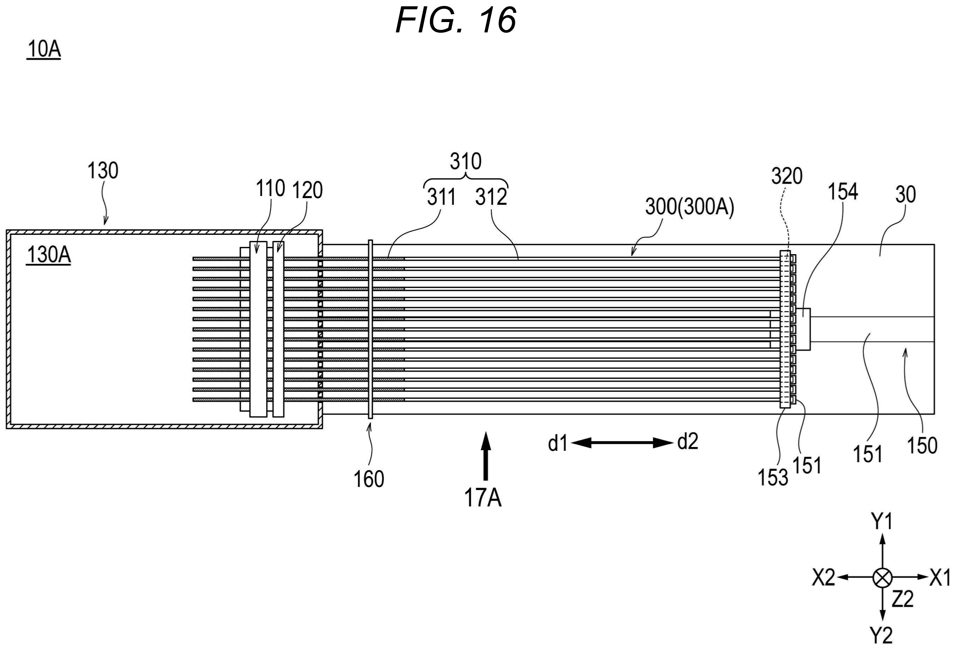

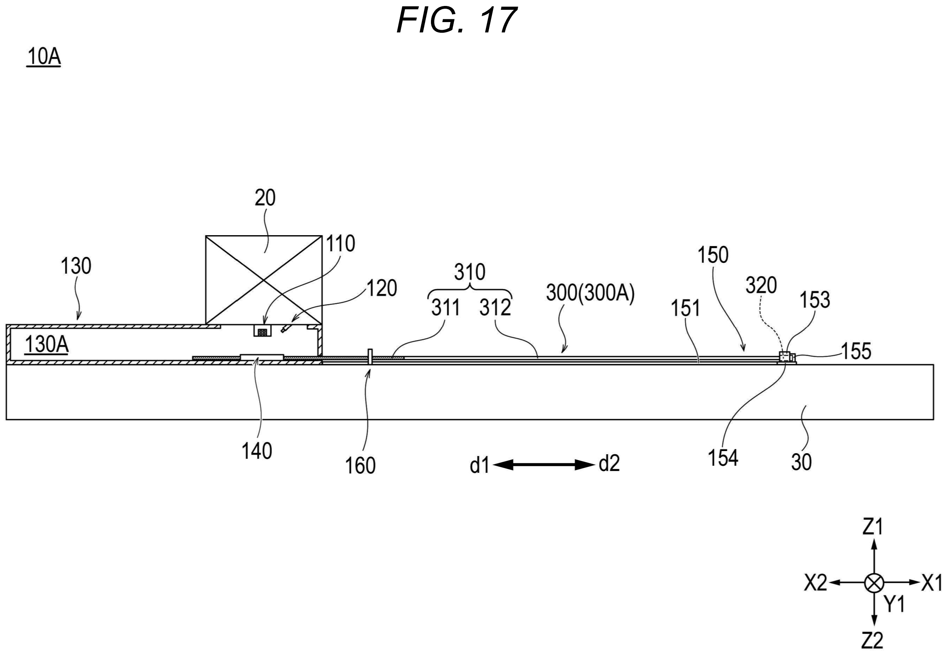

Figs. 16 and 17 illustrate an electron beam irradiation device 10A according to the second embodiment.

Fig. 16 is a plan view of the electron beam irradiation device 10A, and Fig. 17 is a side view of the electron beam irradiation device 10A as viewed from an arrow 17A direction illustrated in Fig. 16. Figs. 16 and 17 are partial cross-sectional views illustrating the chamber portion 130 in cross section so that the inside of the chamber portion 130 can be seen.

In the above-described embodiment, the transport mechanism 150 of the electron beam irradiation device 10A is configured to transport the medical long member 300A in a state where the medical long member 300A is suspended in the direction of gravity. In other words, the electron beam irradiation device 10 is configured such that the rail portion 151 extends in the vertical direction (longitudinal direction) and the entire device is laid out in the vertical direction. On the other hand, the transport mechanism 150 included in the electron beam irradiation device 10A according to the present embodiment is configured to transport the medical long member 300A in the lateral direction (horizontal direction) intersecting the direction of gravity.

As illustrated in Fig. 17, the rail portion 151 is installed on a predetermined frame 30. The device main body 20 is installed on an upper side (arrow Z1 side) of the chamber portion 130.

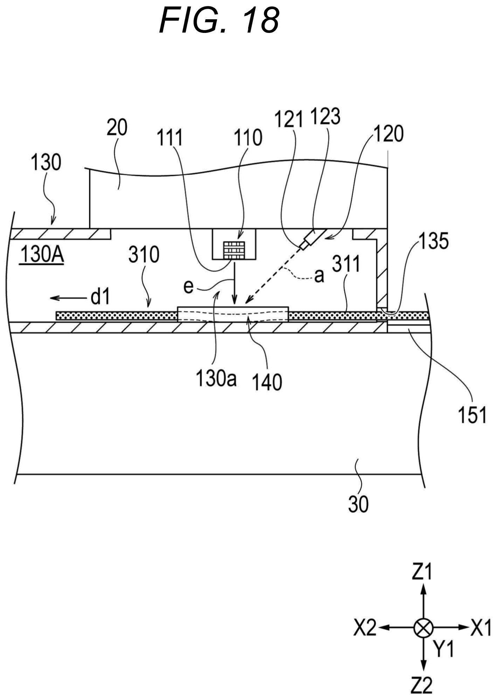

Fig. 18 illustrates a state when the electron beam irradiation device 10A performs irradiation with the electron beam. As illustrated in Fig. 18, the electron beam irradiation unit 110 and the inert gas supply unit 120 are arranged on the upper side (arrow Z1 side) of the chamber portion 130.

The screen portion 140 is arranged on a lower side (arrow Z2 side) of the chamber portion 130 so as to face the electron beam irradiation unit 110 and the inert gas supply unit 120. In addition, similarly to the above-described embodiment, the inert gas supply unit 120 is arranged at a position closer to the hole portion 135 in the chamber portion 130 than the electron beam irradiation unit 110.

When irradiation with the electron beam is performed by the electron beam irradiation device 10A, similarly to the above-described embodiment, the inert gas is injected from the inert gas supply unit 120 toward the portion of the medical long member 300A arranged in the space 130a. The portion of the medical long member 300A arranged in the space 130a comes into contact with the screen portion 140 when the inert gas is sprayed. The inert gas supply unit 120 injects the inert gas in an oblique direction from the upper side of the chamber portion 130 to the lower side of the chamber portion 130. Thus, the electron beam irradiation device 10A can efficiently press the medical long member 300A against the screen portion 140 arranged on the lower side of the chamber portion 130.

By bringing part of the medical long member 300A into contact with the screen portion 140, the electron beam irradiation device 10A can keep a distance between the emission surface 111 of the electron beam irradiation unit 110 and the medical long member 300A constant at a position corresponding to the space 130a. The electron beam irradiation device 10 emits the electron beam from the emission surface 111 of the electron beam irradiation unit 110 in a state where the distance between the emission surface 111 of the electron beam irradiation unit 110 and the medical long member 300A is kept constant, so that it is possible to prevent occurrence of unevenness in curing at each portion in the longitudinal direction of the medical long member 300A.

Although the electron beam irradiation device and the electron beam irradiation method according to the present invention have been described above through the embodiments and the modifications, the present invention is not limited only to the content described in the specification, and can be appropriately changed based on the description of the claims.

In the embodiments and each modification, an example where the medical long member to which the lubricating coat layer is applied is used as the irradiation target object has been described. However, the irradiation target object to which the present invention is applied can be various members for which it is desired to keep the distance between the emission surface of the electron beam irradiation unit and the irradiation target object. For example, the irradiation target object may be a medical instrument such as a stent or an injection puncture needle, or may be a member other than the medical instrument such as a string, a rope, or a hose. The object to be cured by irradiation with the electron beam is not limited to only the lubricating coat layer, and may be, for example, an antibacterial coat layer, an antithrombotic coat layer, or a drug coat layer containing a material that is cured by irradiation with the electron beam. In a case where an intermediate coat layer for enhancing adhesiveness between the surface of the medical long member and the lubricating coat layer is present between the surface of the medical long member and the lubricating coat layer, the object to be cured by irradiation with the electron beam may be the intermediate coat layer. The object to be irradiated with the electron beam may be a surface of the irradiation target object without a coat layer for the purpose of surface modification (for example, surface hydrophilization, improvement of adhesiveness) or physical property modification (for example, improvement in heat resistance and improvement in mechanical strength) of the irradiation target object.

The specific configuration of the electron beam irradiation device of the present invention is not particularly limited as long as the irradiation target object can be brought into contact with the screen portion by the inert gas injected from the inert gas supply unit, and the electron beam can be emitted from the emission surface of the electron beam irradiation unit toward the irradiation target object in a state where the irradiation target object is brought into contact with the screen portion. For example, the injection port 121 of the inert gas supply unit 120 is preferably inclined obliquely toward the first transport direction d1 as in the first embodiment and the second embodiment, but may be inclined obliquely toward the second transport direction d2. In this case, the inert gas supply unit 120 is arranged at a position on the arrow X2 side (the arrow d1 side where the transport mechanism 150 moves the irradiation target object 300) with respect to the electron beam irradiation unit 110. Thus, the structure, arrangement, and the like, of each unit of the electron beam irradiation device are not limited only to the content described in the specification.

The present application is based on Japanese Patent Application No. 2023-127578 filed on August 4, 2023, the disclosure content of which is incorporated herein by reference in its entirety.

### Reference Signs List

10 Electron beam irradiation device
10A Electron beam irradiation device
110 Electron beam irradiation unit
111 Emission surface
120 Inert gas supply unit
121 Injection port
130 Chamber portion
130A Internal space of chamber portion
130a Space between emission surface and screen portion
135 Hole portion
140 Screen portion
140A Screen portion
140B Screen portion
143 Recess portion
143a Recess portion
143b Recess portion
150 Transport mechanism
151 Rail portion
153 Gripping portion
155 Rotation operation unit
160 Workpiece guide
300 Irradiation target object
300A Medical long member
310 Main body portion of medical long member
311 First region
311a Lubricating coat layer before being cured
311b Cured lubricating coat layer
312 Second region
315 Lumen
320 Hub portion
LA Linear distance between emission surface and irradiation target object
d1 First transport direction
d2 Second transport direction
g Gap
θ1 Injection angle

## Claims

1. An electron beam irradiation device comprising:
an electron beam irradiation unit having an emission surface from which an electron beam is emitted;
an inert gas supply unit having an injection port from which an inert gas is injected;
a chamber portion accommodating the emission surface and the injection port;
a screen portion located in the chamber portion and facing the emission surface; and
a transport mechanism configured to be able to arrange part of an irradiation target object in a space located between the emission surface and the screen portion, wherein
the injection port is located on the emission surface side in the chamber portion and is inclined from the emission surface side toward the screen portion side, and
the inert gas supply unit is configured to inject an inert gas to a position facing the emission surface in the screen portion through the injection port in a state where the part of the irradiation target object is arranged in the space located between the emission surface and the screen portion.

2. The electron beam irradiation device according to claim 1, wherein the transport mechanism is located outside the chamber portion,
the chamber portion includes a hole portion allowing the part of the irradiation target object transported by the transport mechanism to be introduced into the chamber portion, and
the transport mechanism is configured to arrange the part of the irradiation target object in the space located between the emission surface and the screen portion through the hole portion of the chamber portion.

3. The electron beam irradiation device according to claim 2, wherein the transport mechanism includes a rail portion extending toward the chamber portion, and a gripping portion that is movable along the rail portion and is configured to be able to fix the part of the irradiation target object, and
the transport mechanism is configured to move the gripping portion along the rail portion in a state where the irradiation target object is suspended in a direction of gravity by the gripping portion.

4. The electron beam irradiation device according to claim 3, wherein the irradiation target object is a medical long member including a long main body portion extending in a longitudinal direction and a hub portion arranged at one end portion of the main body portion,
the main body portion includes a first region to which a lubricating coat layer to be irradiated with an electron beam is applied and a second region that is arranged closer to the one end portion than the first region and to which the lubricating coat layer is not applied, and
the transport mechanism is configured to arrange the first region in the space located between the emission surface and the screen portion by moving the gripping portion in a state where only the hub portion is fixed by the gripping portion.

5. The electron beam irradiation device according to claim 3, wherein the transport mechanism includes a rotation operation unit capable of driving rotation operation of the gripping portion in a state where the gripping portion fixes the irradiation target object.

6. The electron beam irradiation device according to claim 1, wherein the screen portion has a recess portion recessed to a side away from the emission surface and the injection port.

7. An electron beam irradiation method in an electron beam irradiation device that irradiates an irradiation target object with an electron beam, the electron beam irradiation device comprising:
an electron beam irradiation unit having an emission surface from which the electron beam is emitted;
an inert gas supply unit having an injection port from which an inert gas is injected;
a screen portion facing the emission surface; and
a transport mechanism configured to be able to arrange part of the irradiation target object in a space located between the emission surface and the screen portion, the electron beam irradiation method comprising:
injecting an inert gas from the injection port located on the emission surface side to the irradiation target object in a state where the part of the irradiation target object is arranged in the space located between the emission surface and the screen portion; and
irradiating the irradiation target object with the electron beam from the emission surface in a state where the irradiation target object is in contact with the screen portion with the inert gas.

8. The electron beam irradiation method according to claim 7, wherein the transport mechanism includes a rail portion and a gripping portion that is movable along the rail portion and is configured to fix the part of the irradiation target object,
the irradiation target object is a medical long member that includes a long main body portion extending in a longitudinal direction, and a hub portion arranged at one end portion of the main body portion,
the main body portion includes a first region to which a lubricating coat layer to be irradiated with an electron beam is applied and a second region that is arranged closer to the one end portion than the first region and to which the lubricating coat layer is not applied, and
the transport mechanism moves the gripping portion in a state where only the hub portion is fixed by the gripping portion, and the first region is irradiated with an electron beam while an inert gas is injected toward the irradiation target object in a state where the first region is arranged in the space located between the emission surface and the screen portion.
